# EUROPEAN PATENT APPLICATION

(11) **EP 3 173 378 A1**
(43) Date of publication of application: **31.05.2017**
(21) Application number: 16197405.0
(22) Date of filing: 04.11.2016
(51) Int. Cl.: C01B 25/14, H01M 10/052

(54) **IONICALLY CONDUCTIVE COMPOUNDS AND ARTICLES COMPRISING THEM**

(30) Priority: 24.11.2015 US 201562259467 P
(71) Applicant: BASF SE, 67056 Ludwigshafen am Rhein (DE); Sion Power Corporation, Tucson, AZ 85756 (US)
(72) Inventor: Schneider, Holger, Tucson, AZ Arizona 85704 (US); Leitner, Klaus, 67063 Ludwigshafen (DE); Kulisch, Jörn, 69214 Eppelheim (DE); Safont Sempere, Marina, 67061 Ludwigshafen (DE); Du, Hui, Tucson, AZ Arizona 85712 (US); Kelley, Tracy Earl, Tucson, AZ Arizona 85748 (US); Scordilis-Kelley, Chariclea, Tucson, AZ Arizona 85748 (US); ter Maat, Johan, 68163 Mannheim (DE)
(74) Representative: Eisenführ Speiser

(57) **Abstract**

Ionically conductive compounds, their use, methods for forming particles comprising said compounds, articles comprising said compounds for use in an electrochemical cell and corresponding electrochemical cells are disclosed.

## Description

The present invention relates to ionically conductive compounds, their use, methods for forming particles comprising said compounds, articles comprising said compounds for use in an electrochemical cell and corresponding electrochemical cells.

Lithium compound-containing electrochemical cells and batteries including such cells are modern means for storing energy. They exceed certain conventional secondary batteries with respect to capacity and life-time and, in many times, use of toxic materials such as lead can be avoided. However, in contrast to conventional lead-based secondary batteries, various technical problems have not yet been solved.

Secondary batteries based on cathodes including lithiated metal oxides such as LiCoO₂, LiMn₂O₄, and LiFePO₄ are well established. However, some batteries of this type are limited in capacity. For that reason, numerous attempts have been made to improve the electrode materials.

Particularly promising are so-called lithium sulfur batteries. In such batteries, lithium will be oxidized and converted to lithium sulfides such as Li₂S₈₋ₐ, wherein a is a number in the range from zero to 7. During recharging, lithium and sulfur will be regenerated. Such secondary cells have the advantage of a high capacity.

Sulfide materials of different compositions and nature are known to be lithium-ion conductors (e.g., Li₂Sₓ/P₂S₅ glasses, Li₂Sₓ/P₂S₅-derived glass ceramics, Li₇P₃S₁₁, thio-LISICON, oxysulfide glasses). However, such materials may suffer from issues such as low stability against liquid organic electrolyte solutions, insufficient stability against metallic lithium or high voltage cathode materials, extreme sensitivity to moisture and/or air, and/or an intrinsically low ionic conductivity.

Accordingly, improved ionically conductive, especially lithium-ion ionically conductive compounds are needed.

According to a first aspect of the present invention, there is provided a compound of formula (I):

Li₂ₓS_{x+w+5z}M_{y}P_{2z} (I)

wherein:
each atom M independently of each other atom M is selected from the group consisting of Lanthanides and elements of Group 3, Group 4, Group 5, Group 6, Group 7, Group 8, Group 9, Group 12, Group 13 and Group 14 of the periodic system of elements, and
x is 8-16,
y is 0.1-6,
w is 0.1-15 and
z is 0.1-3.

As used herein each of x, y, z and w can be any fraction number between the lower limit and the upper limit as defined above.

In a compound of formula (I) preferably
- x is 10 or greater, particularly x is 10-14, and/or
- y is 1 and/or
- w is equal to y, is 1.5 y or 2y and/or
- z is 1.

In certain compounds of formula (I), each atom M independently of each other atom M is selected from) the group consisting of silicon, tin, germanium, zinc, iron, zirconium, and aluminum. For instance, each M is silicon.

Certain compounds of formula (I) have an amorphous structure. Yet other compounds of formula (I) have a crystalline structure, for instance a cubic crystal structure.

According to a second aspect of the present invention, there is provided an article for use in an electrochemical cell, said article comprising one or more compounds of formula (I) as defined above with regard to the first aspect of the present invention. Statements made above regarding preferred compounds of formula (I) apply also to this aspect of the invention.

A preferred article according to the invention comprises a layer comprising the compound of formula (I). Yet another preferred article according to the invention comprises the compound of formula (I) deposited on a layer.

Preferably, an article according to the invention comprises a plurality of particles that comprise the compound of formula (I). Further preferably, an article according to the invention comprises a layer comprising a plurality of particles that comprise the compound of formula (I).

Preferably, the plurality of particles have an average largest cross-sectional dimension of greater than or equal to 10 nm and less than or equal to 100 µm.

Preferably, the plurality of particles have an average ion conductivity of greater than or equal to 10⁻⁴ S/cm.

Certain articles according to the present invention further comprise an electrode, and the layer comprising the compound of formula (I) is in direct contact with the electrode.

In certain articles according to the present invention, the layer comprising the compound of formula (I) is a separator. Herein, the layer comprising the compound of formula (I) preferably has an average thickness of greater than or equal to 1 mm and less than or equal to 50 µm.

In certain articles according to the present invention, the layer comprising the compound of formula (I) is a protective layer. Herein, the layer comprising the compound of formula (I) preferably has an average thickness of greater than or equal to 1 nm and less than or equal to 10 µm.

In certain articles according to the present invention the layer comprising the compound of formula (I) is a solid electrolyte layer. Herein, the layer comprising the compound of formula (I) preferably has an average thickness of greater than or equal to 50 nm and less than or equal to 25 µm.

In certain articles according to the present invention the layer comprising the compound of formula (I) is a lithium-intercalation electrode. Herein, the layer comprising the compound of formula (I) preferably has an average ion conductivity of greater than or equal to 10⁻⁴ S/cm.

In certain articles according to the present invention, at least a portion of the layer comprising the compound of formula (I) is crystalline.

In certain articles according to the present invention the layer comprising the compound of formula (I) is greater than or equal to 50 wt.-% and less than or equal to 99 wt.-% crystalline.

In certain articles according to the present invention the crystalline fraction of the compound of formula (I) comprised by the layer is in the range of from 50 wt.-% to 100 wt.-%, based on the total weight of the compound of formula (I) comprised by the layer.

In yet other articles according to the present invention the layer comprising the compound of formula (I) is amorphous.

According to a further aspect of the present invention, there is provided an electrochemical cell comprising an article as defined above with regard to the second aspect of the present invention. Statements made above regarding preferred articles according to the present invention apply also to this aspect of the invention.

Certain electrochemical cells according to the present invention further comprise a liquid electrolyte.

Certain electrochemical cells according to the present invention comprise an anode comprising lithium or silicon and/or a cathode comprising a lithium-intercalation species.

According to a further aspect of the present invention, there is provided a method, comprising:
- heating a mixture of precursors comprising atoms of the elements Li, S, P, and M wherein M is as defined above, to a temperature ranging from 400 °C to 900 °C, preferably to a temperature ranging from 400 °C to 800 °C, for a duration ranging from 3 hours to 24 hours;
- cooling the mixture; and
- forming a plurality of particles comprising a compound of formula (I) as defined above.

Statements made above regarding preferred compounds of formula (I) apply also to this aspect of the invention.

In certain methods according to the invention, the mixture of precursors comprises Li₂S, MSₐ and P_{b}S_{c}, wherein:
a is 0-8;
b is 0-2; and
c is 0-8, such that b+c is 1 or greater.

In certain methods according to the invention, prior to heating, the mixture is mixed by ball milling. In certain methods according to the invention, heating the mixture occurs at a pressure of between 0.1 MPa and 0.3 MPa.

In certain methods according to the invention forming said plurality of particles comprises grinding the mixture.

According to a further aspect, the present invention relates to a method for forming an article for use in an electrochemical cell, said method comprising the step of
- depositing on a layer a plurality of particles comprising a compound of formula (I) as defined as defined above with regard to the first aspect of the present invention.

Statements made above regarding preferred compounds of formula (I) and preferred articles for use in an electrochemical cell apply also to this aspect of the invention.

Preferably, the plurality of particles have an average largest cross-sectional dimension greater than or equal to 10 nm and less than or equal to 100 microns.

In certain methods according to the present invention, depositing the plurality of particles comprising the compound of formula (I) on the layer comprises aerosol deposition and/or vacuum deposition.

In certain methods according to the present invention, the layer on which the particles are deposited is an electrode, a lithium metal layer, a protective layer or a separator.

According to a further aspect, the present invention relates to the use of a compound of the formula (I)
- as an ion conductor in an electrochemical cell or in an article for use in an electrochemical cell, and/or
- for forming an electrochemical cell or an article for use in an electrochemical cell.

Statements made above regarding preferred compounds of formula (I) apply also to this aspect of the invention.

Compounds of formula (I) have been found to be ionically conductive, for instance lithium-ion ionically conductive. One or more compound of formula (I) may be incorporated into an electrochemical cell (e.g., a lithium-sulfur electrochemical cell, a lithium-ion electrochemical cell, an intercalated-cathode based electrochemical cell) as, for example, a protective layer for an electrode, a solid electrolyte layer, and/or any other appropriate component within the electrochemical cell.

The incorporation of one or more compounds of formula (I) as described herein into electrochemical cells may, for example, increase the stability of an electrode (e.g., a lithium electrode) in the electrochemical cell, increase ionic conductivity, and/or may facilitate fabrication (e.g., formation of thin layers), as compared to certain existing ionically conductive compounds used in electrochemical cells. The incorporation of one or more compounds of formula (I) as described herein into electrochemical cells may prevent or reduce the occurrence of chemical reactions between a component of an electrolyte (e.g., polysulfides) and an electroactive material of an anode (e.g., an anode comprising lithium, such as metallic lithium).

Layers comprising one or more compounds of formula (I), as described in more detail herein, may, in some cases, selectively conduct lithium cations but not anions, and may function as a barrier (e.g., protective structure) for electrolytes (e.g., liquid electrolytes). For example, the use of compounds of formula (I) in a protective layer (e.g., in an electrochemical cell including a liquid electrolyte) may offer several advantages over certain existing protective layers, including reduction in the consumption of lithium (e.g., lithium metal) during charge/discharge of the electrochemical cell. The protective layer may be used to substantially inhibit direct contact of an electrode (e.g., the anode, the cathode) with an electrolyte and/or a particular species present in the electrolyte. The use of compounds of formula (I) as described herein in solid electrolyte layers (e.g., in solid state electrochemical cells) may offer several advantages over certain existing solid electrolytes including increased ion conductivity and/or increased chemical stability.

The disclosed compounds of formula (I) may be incorporated into electrochemical cells including primary batteries or secondary batteries, which can be charged and discharged numerous times. The compounds, articles, and methods described herein include those which can be used in association with batteries including a liquid electrolyte as well as those which can be used in association with solid state batteries.

Certain compounds, articles and methods described herein can be used in association with lithium batteries (e.g., lithium-sulfur batteries). It should be appreciated, however, that while much of the description herein relates to lithium-sulfur batteries, the compounds of formula (I) and layers comprising compounds of formula (I) as described herein may be applied to other lithium-based batteries, including other alkali metal-based batteries.

The electrochemical cells described herein may be employed in various applications, for example, making or operating cars, computers, personal digital assistants, mobile telephones, watches, camcorders, digital cameras, thermometers, calculators, laptop BIOS, communication equipment or remote car locks.

A compound according to the present invention has a composition as in formula (I):

Li₂ₓS_{x+w+5z}M_{y}P_{2z} (I),

wherein:
each atom M independently of each other atom M is selected from the group consisting of Lanthanides and elements of Group 3, Group 4, Group 5, Group 6, Group 7, Group 8, Group 9, Group 12, Group 13 and Group 14 of the periodic system of elements, and
x is 8-16,
y is 0.1-6,
w is 0.1-15 and
z is 0.1-3.

In compounds according to formula (I), x may be 8-16, 8-12, 10-12, 10-14, or 12-16. For instance, x is 8 or greater, 8.5 or greater, 9 or greater, 9.5 or greater, 10 or greater, 10.5 or greater, 11 or greater, 11.5 or greater, 12 or greater, 12.5 or greater, 13 or greater, 13.5 or greater, 14 or greater, 14.5 or greater, 15 or greater, or 15.5 or greater. For instance, x is less than or equal to 16, less than or equal to 15.5, less than or equal to 15, less than or equal to 14.5, less than or equal to 14, less than or equal to 13.5, less than or equal to 13, less than or equal to 12.5, less than or equal to 12, less than or equal to 11.5, less than or equal to 11, less than or equal to 10.5, less than or equal to 10, less than or equal to 9.5, or less than or equal to 9. Combinations of the above referenced ranges are also possible (e.g., greater than or equal to 8 and less than or equal to 16, greater than or equal to 10 and less than or equal to 12). Other ranges are also possible. In some compounds of formula (I), x is 10. In other compounds of formula (I) x is 12.

In compounds according to formula (I), y may be 0.1-6, 0.1-1, 0.1-3, 0.1-4.5, 0.1-6, 0.8-2, 1-4, 2-4.5, 3-6 or 1-6. For example, y is greater than or equal to 0.1, greater than or equal to 0.2, greater than or equal to 0.4, greater than or equal to 0.5, greater than or equal to 0.6, greater than or equal to 0.8, greater than or equal to 1, greater than or equal to 1.2, greater than or equal to 1.4, greater than or equal to 1.5, greater than or equal to 1.6, greater than or equal to 1.8, greater than or equal to 2.0, greater than or equal to 2.2, greater than or equal to 2.4, greater than or equal to 2.5, greater than or equal to 2.6, greater than or equal to 2.8, greater than or equal to 3.0, greater than or equal to 3.5, greater than or equal to 4.0, greater than or equal to 4.5, greater than or equal to 5.0, or greater than or equal to 5.5. For example, y is less than or equal to 6, less than or equal to 5.5, less than or equal to 5.0, less than or equal to 4.5, less than or equal to 4.0, less than or equal to 3.5, less than or equal to 3.0, less than or equal to 2.8, less than or equal to 2.6, less than or equal to 2.5, less than or equal to 2.4, less than or equal to 2.2, less than or equal to 2.0, less than or equal to 1.8, less than or equal to 1.6, less than or equal to 1.5, less than or equal to 1.4, less than or equal to 1.2, less than or equal to 1.0, less than or equal to 0.8, less than or equal to 0.6, less than or equal to 0.5, less than or equal to 0.4, or less than or equal to 0.2. Combinations of the above-referenced ranges are also possible (e.g., greater than or equal to 0.1 and less than or equal to 6.0, greater than or equal to 1 and less than or equal to 6, greater than or equal to 1 and less than or equal to 3, greater than or equal to 0.1 and less than or equal to 4.5, greater than or equal to 1.0 and less than or equal to 2.0). Other ranges are also possible. In a compound of formula (I) which includes more than one M, the total y may have a value in one or more of the above-referenced ranges and in some embodiments may be in the range of 0.1-6. In certain compounds according to formula (I), y =1.

In compounds according to formula (I), z may be 0.1-3, 0.1-1, 0.8-2, or 1-3. For example z is greater than or equal to 0.1, greater than or equal to 0.2, greater than or equal to 0.4, greater than or equal to 0.5, greater than or equal to 0.6, greater than or equal to 0.8, greater than or equal to 1, greater than or equal to 1.2, greater than or equal to 1.4, greater than or equal to 1.5, greater than or equal to 1.6, greater than or equal to 1.8, greater than or equal to 2.0, greater than or equal to 2.2, greater than or equal to 2.4, greater than or equal to 2.5, greater than or equal to 2.6, or greater than or equal to 2.8. For example z is less than or equal to 3.0, less than or equal to 2.8, less than or equal to 2.6, less than or equal to 2.5, less than or equal to 2.4, less than or equal to 2.2, less than or equal to 2.0, less than or equal to 1.8, less than or equal to 1.6, less than or equal to 1.5, less than or equal to 1.4, less than or equal to 1.2, less than or equal to 1.0, less than or equal to 0.8, less than or equal to 0.6, less than or equal to 0.5, less than or equal to 0.4, or less than or equal to 0.2. Combinations of the above-referenced ranges are also possible (e.g., greater than or equal to 0.1 and less than or equal to 3.0, greater than or equal to 1.0 and less than or equal to 2.0). Other ranges are also possible. In certain compounds according to formula (I), z =1.

In compounds according to formula (I), the ratio of y to z may be greater than or equal to 0.03, greater than or equal to 0.1, greater than or equal to 0.25, greater than or equal to 0.5, greater than or equal to 0.75, greater than or equal to 1, greater than or equal to 2, greater than or equal to 4, greater than or equal to 8, greater than or equal to 10, greater than or equal to 15, greater than or equal to 20, greater than or equal to 25, greater than or equal to 30, greater than or equal to 40, greater than or equal to 45, or greater than or equal to 50. In compounds according to formula (I) the ratio of y to z may be less than or equal to 60, less than or equal to 50, less than or equal to 45, less than or equal to 40, less than or equal to 30, less than or equal to 25, less than or equal to 20, less than or equal to 15, less than or equal to 10, less than or equal to 8, less than or equal to 4, less than or equal to 3, less than or equal to 2, less than or equal to 1, less than or equal to 0.75, less than or equal to 0.5, less than or equal to 0.25, or less than or equal to 0.1. Combinations of the above-referenced ranges are also possible (e.g., a ratio of y to z of greater than or equal to 0.1 and less than or equal to 60, a ratio of y to z of greater than or equal to 0.1 and less than or equal to 10, greater than or equal to 0.25 and less than or equal to 4, or greater than or equal to 0.75 and less than or equal to 2). In certain compounds according to formula (I), the ratio of y to z is 1.

In compounds according to formula (I), w may be 0.1-15, 0.1-1, 0.8-2, 1-3, 1.5-3.5, 2-4, 2.5-5, 3-6, 4-8, 6-10, 8-12, or 10-15. For example, w is greater than or equal to 0.1, greater than or equal to 0.2, greater than or equal to 0.4, greater than or equal to 0.5, greater than or equal to 0.6, greater than or equal to 0.8, greater than or equal to 1, greater than or equal to 1.5, greater than or equal to 2, greater than or equal to 2.5, greater than or equal to 3, greater than or equal to 4, greater than or equal to 6, greater than or equal to 8, greater than or equal to 10, greater than or equal to 12, or greater than or equal to 14. For example, w is less than or equal to 15, less than or equal to 14, less than or equal to 12, less than or equal to 10, less than or equal to 8, less than or equal to 6, less than or equal to 4, less than or equal to 3, less than or equal to 2.5, less than or equal to 2, less than or equal to 1.5, less than or equal to 1, less than or equal to 0.8, less than or equal to 0.6, less than or equal to 0.5, less than or equal to 0.4, or less than or equal to 0.2. Combinations of the above-referenced ranges are also possible (e.g., greater than or equal to 0.1 and less than or equal to 15, greater than or equal to 1.0 and less than or equal to 3.0). Other ranges are also possible. In certain compounds according to formula (I), w is 1. In yet other compounds according to formula (I), w is 1.5. In yet other compounds according to formula (I), w is 2.

For example an ionically conductive compound according to the present invention has a composition according to a formula selected from the group consisting of Li₁₆S₁₅MP₂, Li₂₀S₁₇MP₂ and Li₂₄S₁₉MP₂.

In certain compounds according to formula (I) w is equal to y. In other compounds according to formula (I), w is equal to 1.5y. In yet other compounds according to formula (I), w is equal to 2y. In yet other yet other compounds according to formula (I), w is equal to 2.5y. In yet further compounds according to formula (I), w is equal to 3y. Without wishing to be bound by theory, those skilled in the art would understand that the value of w may depend upon the valency of M. For example, M is a tetravalent atom, w is 2y, and y is 0.1-6, or M is a trivalent atom, w is 1.5y, and y is 0.1-6, or M is a bivalent atom, w is equal to y, and y is 0.1-6. Other valences and values for w are also possible.

In some compounds according to formula (I) M is tetravalent, x is 8-16, y is 0.1-6, w is 2y, and z is 0.1-3. Some such compounds have a composition according to formula (II):

Li₂ₓS_{x+2y+5z}M_{y}P_{2z} (II),

where x is 8-16, y is 0.1-6, z is 0.1-3, and M is tetravalent and selected from the group consisting of Lanthanides, Group 4, Group 8, Group 12, and Group 14 atoms, and combinations thereof. In an exemplary compound according to formula (II), M is Si, x is 10.5, y is 1, and z is 1 such that the compound of formula (II) is Li₂₁S_{17.5}SiP₂. In another exemplary compound according to formula (II), M is Si, x is 10.5, y is 2, and z is 0.5 such that the compound of formula (II) is Li₂₁S₁₇Si₂P.

In yet other compounds according to formula (I) M is trivalent, x is 8-16, y is 0.1-6, w is 1.5y, and z is 0.1-3. Some such compounds have a composition according to formula (III):

Li₂ₓS_{x+1.5y+5z}M_{y}P_{2z} (III),

where x is 8-16, y is 0.1-6, z is 0.1-3, and M is trivalent and selected from the group consisting of Lanthanides, Group 3, Group 4, Group 5, Group 6, Group 7, Group 8, Group 9, Group 12, Group 13, and Group 14 atoms, and combinations thereof. For example, M is Ga, x is 10.5, y is 1, and z is 1 such that the compound of formula (III) is Li₂₁S₁₇GaP₂.

For instance M is a Group 4 (i.e. IUPAC Group 4) atom such as zirconium, or M is a Group 8 (i.e. IUPAC Group 8) atom such as iron, or M is a Group 12 (i.e. IUPAC Group 12) atom such as zinc, or M is a Group 13 (i.e. IUPAC Group 13) atom such as aluminum, or M is a Group 14 (i.e. IUPAC Group 14) atom such as silicon, germanium, or tin. In some cases, M may be selected from the groups consisting of Lanthanides, Group 3, Group 4, Group 5, Group 6, Group 7, Group 8, Group 9, Group 12, Group 13, and/or Group 14 atoms. For example, M may be selected from silicon, tin, germanium, zinc, iron, zirconium, aluminum, and combinations thereof. Preferably, M is selected from silicon, germanium, aluminum, iron and zinc. In some cases M is a transition metal atom.

In some cases, M may be a combination of two or more atoms selected from the groups consisting of Lanthanides, Group 3, Group 4, Group 5, Group 6, Group 7, Group 8, Group 9, Group 12, Group 13, and Group 14 atoms. That is, in compounds of formula (I) which include more than one atom M, each atom M may be independently selected from the group consisting of Lanthanides, Group 3, Group 4, Group 5, Group 6, Group 7, Group 8, Group 9, Group 12, Group 13, and Group 14 atoms. In some compounds of formula (I), M is a single atom. In other compounds of formula (I), M is a combination of two atoms. In yet other compounds of formula (I), M is a combination of three atoms. In further compounds of formula (I), M is a combination of four atoms. For example, M may be a combination of one or more monovalent atoms, one or more bivalent atoms, one or more trivalent atoms, and/or one or more tetravalent atoms selected from the groups consisting of Lanthanides, Group 3, Group 4, Group 5, Group 6, Group 7, Group 8, Group 9, Group 12, Group 13, and Group 14 atoms.

The stoichiometric ratio of each atom in M is such that the total amount of atoms present in M is y and is 0.1-6, or any other suitable range described herein for y. For example, M is a combination of two atoms such that the total amount of the two atoms present in M is y and is 0.1-6. In certain compounds of formula (I), each atom is present in M in substantially the same amount and the total amount of atoms present in M is y and within the range 0.1-6, or any other suitable range described herein for y. In other compounds of formula (I), each atom may be present in M in different amounts and the total amount of atoms present in M is y and within the range 0.1-6, or any other suitable range described herein for y. For example, in a compound according to formula (I) each atom in M is either silicon or germanium and y is 0.1-6. For example, herein each atom in M may be either silicon or germanium, each present in substantially the same amount, and y is 1 since M_{y} is Si_{0.5}Ge_{0.5}. In another exemplary compound of formula (I), each atom in M may be either silicon or germanium, each atom present in different amounts such that M_{y} is Si_{y-p}Geₚ, where p is between 0 and y (e.g., y is 1 and p is 0.25 or 0.75). Other ranges and combinations are also possible. Those skilled in the art would understand that the value and ranges of y, may depend on the valences of M as a combination of two or more atoms, and would be capable of selecting and/or determining y based upon the teachings of this specification. As noted above, when a compound of formula (I) includes more than one atom in M, the total y may be in the range of 0.1-6.

In exemplary compounds of formula (I), M is silicon. For example, those compounds of formula (I) have a composition Li₂ₓS_{x+w+5z}Si_{y}P_{2z}, where x is greater than or equal to 8 and less than or equal to 16, y is greater than or equal to 0.1 and less than or equal to 3, w is equal to 2y, and z is greater than or equal to 0.1 and less than or equal to 3. Each x, y and z may independently be chosen from the values and ranges of x, y and z described above, respectively. For example, x is 10, y is 1, and z is 1, and the compound is Li₂₀S₁₇SiP₂, or x is 10.5, y is 1, and z is 1, and the compound is Li₂₁S_{17.5}SiP₂, or x is 11, y is 1, and z is 1, and the compound is Li₂₂S₁₈SiP₂, or x is 12, y is 1, and z is 1, and the compound is Li₂₄S₁₉SiP₂, or x is 14, y is 1, and z is 1, and the compound is Li₂₈S₂₁SiP₂.

In yet other exemplary compounds of formula (I), M is a combination of two atoms, wherein the first atom is Si and the second atom is selected from the groups consisting of Lanthanides, Group 3, Group 4, Group 5, Group 6, Group 7, Group 8, Group 9, Group 12, Group 13, and Group 14 atoms. For example, the ionically conductive compound has a composition as in formula (IV):

Li₂ₓS_{x+w+5z}SiₐQ_{b}P_{2z} (IV)

where Q is selected from the groups consisting of Lanthanides, Group 3, Group 4, Group 5, Group 6, Group 7, Group 8, Group 9, Group 12, Group 13, and Group 14 atoms, a+b=y, and each w, x, y and z may independently be chosen from the values and ranges of w, x, y and z described above, respectively. For example an ionically conductive compound has a composition according to a formula having a composition as in formula (IV) is selected from the group consisting of Li₂₁La_{0.5}Si_{1.5}PS_{16.75}, Li₂₁LaSiPS_{16.5}, Li₂₁AlSiPS_{16.5}, Li₂₁Al_{0.5}Si_{1.5}PS_{16.75}, and Li₂₁BP₂S₁₇.In certain preferred cases the ionically conductive compound has a composition as in formula (I):

Li₂ₓS_{x+w+5z}M_{y}P_{2z} (I)

wherein x is 5-14, y is 1-2, z is 0.5-1, (x+w+5z) is 12-21, and M is selected from the group consisting of Si, Ge, La, Al, B, Ga, and combinations thereof (e.g., such that M_{y} is La_{0.5}Si_{1.5}, LaSi, AlSi, Ai_{0.5}Si_{1.5}, or AlSi₂). Non-limiting examples of compounds having a composition as in formula (I) include Li₁₀S₁₂SiP₂, Li₁₂S₁₃SiP₂, Li₁₆S₁₅SiP₂, Li₂₀S₁₇SiP₂, Li₂₁S₁₇Si₂P, Li₂₁S_{17.5}SiP₂, Li₂₂S₁₈SiP₂, Li₂₄S₁₉SiP₂, Li₂₈S₂₁SiP₂, Li₂₄S₁₉GeP₂, Li₂₁SiP₂S_{17.5}, Li₂₁La_{0.5}Si_{1.5}PS_{16.75}, Li₂₁LaSiPS_{16.5}, Li₂₁La₂PS₁₆, Li₂₁AlP₂S₁₇, Li₁₇AlP₂S₁₅, Li₁₇Al₂PS₁₄, Li₁₁AlP₂S₁₂, Li₁₁AlP₂S₁₂, Li₂₁AlSiPS_{16.5}, Li₂₁Al_{0.5}Si_{1.5}PS_{16.75}, Li₂₁BP₂S₁₇, and Li₂₁GaP₂S₁₇.

It should be appreciated that while much of the above description herein relates to ionically conductive compounds where y is 1, z is 1, w is 2y, and comprises silicon, other combinations of values for w, x, y, and z and elements for M are also possible. For example, in some cases, M is Ge and the compound may be Li₂ₓS_{x+w+5z}Ge_{y}P_{2z}, where x is greater than or equal to 8 and less than or equal to 16, y is greater than or equal to 0.1 and less than or equal to 3, w is equal to 2y, and z is greater than or equal to 0.1 and less than or equal to 3. Each w, x, y and z may independently be chosen from the values and ranges of w, x, y and z described above, respectively. For example, w is 2, x is 10, y is 1, and z is 1, and the compound is Li₂₀S₁₇GeP₂, or w is 2, x is 12, y is 1, and z is 1, and the compound is Li₂₄S₁₉GeP₂, or w is 2, x is 14, y is 1, and z is 1, and the compound is Li₂₈S₂₁GeP₂. Other stoichiometric ratios, as described above, are also possible.

In other exemplary compounds of formula (I), M is Sn. For example, those compounds of formula (I) have a composition Li₂ₓS_{x+w+5z}Sn_{y}P_{2z}, where x is greater than or equal to 8 and less than or equal to 16, y is greater than or equal to 0.1 and less than or equal to 3, w is equal to 2y, and z is greater than or equal to 0.1 and less than or equal to 3. Each w, x, y and z may independently be chosen from the values and ranges of w, x, y and z described above, respectively. For example, w is 2, x is 10, y is 1, and z is 1, and the compound is Li₂₀S₁₇SnP₂, or w is 2, x is 12, y is 1, and z is 1, and the compound is Li₂₄S₁₉SnP₂, or w is 2, x is 14, y is 1, and z is 1, and the compound is Li₂₈S₂₁SnP₂. Other stoichiometric ratios, as described above, are also possible.

For instance, a compound of formula (I) is in the form of a particle. A plurality of particles comprising a compound of formula (I) may be substantially ionically conductive (e.g., substantially conductive to lithium ions). For example, a plurality of particles comprising a compound of formula (I) may be conductive to ions of an electroactive material (e.g. lithium). In some cases, the plurality of particles may have an average ion conductivity (e.g., lithium ion conductivity) of greater than or equal to 10⁻⁴ S/cm. For instance, the average ion conductivity of the plurality of particles is greater than or equal to greater than or equal to 10⁻⁴ S/cm, greater than or equal to 10⁻³ S/cm, greater than or equal to 10⁻² S/cm, or greater than or equal to 10⁻¹ S/cm. For instance, the average ion conductivity of the plurality of particles is less than or equal to 1 S/cm, less than or equal to 10⁻¹ S/cm, less than or equal to 10⁻² S/cm, or less than or equal to 10⁻³ S/cm. Combinations of the above-reference ranges are also possible (e.g., an ion conductivity greater than or equal to 10⁻⁴ S/cm and less than or equal to 10⁻¹ S/cm, greater than or equal to 10⁻⁴ S/cm and less than or equal to 10⁻² S/cm). Other ion conductivities are also possible.

The average ion conductivity of the plurality of particles can be determined before the particles are incorporated into a layer of an electrochemical cell (e.g., a protective layer, a solid electrolyte layer, an intercalated electrode layer). The average ionic conductivity can be measured by pressing the particles between two copper cylinders at a pressure of up to 4 tons/cm². The average ion conductivity (i.e., the inverse of the average resistivity) can be measured at 500 kg/cm² increments using a conductivity bridge (i.e., an impedance measuring circuit) operating at 1 kHz. Sometimes the pressure is increased until changes in average ion conductivity are no longer observed in the sample. Conductivity may be measured at room temperature (e.g., 25 °C).

The average largest cross-sectional dimension of a plurality of particles (e.g., within a layer of an electrochemical cell, or prior to being incorporated into a layer) comprising the ionically conductive compound may be, for example, less than or equal to 100 µm, less than or equal to 50 µm, less than or equal to 25 µm, less than or equal to 10 µm, less than or equal to 5 µm, less or equal to 2 µm, less than or equal to 1 µm, less than or equal to 500 nm, less than or equal to 100 nm, or less than or equal to 50 nm. The average largest cross-sectional dimension of the plurality of particles may be greater than or equal to 10 nm, greater than or equal to 100 nm, greater than or equal to 500 nm, greater than or equal to 1 µm, greater than or equal to 2 µm, greater than or equal to 5 µm, greater than or equal to 10 µm, greater than or equal to 25 µm, or greater than or equal to 50 µm. Combinations of the above-referenced ranges are also possible (e.g., a largest cross-sectional dimension of less than 100 um and greater than 10 µm, less than 25 µm and greater than 1 µm, less than 2 µm and greater than 100 nm, less than 500 nm and greater than 10 nm).

The average largest cross-sectional dimension of the plurality of particles may be determined, for example, by imaging the particles with a scanning electron microscope (SEM). An image may be acquired at a magnification between 10X to 100,000X, depending on the overall dimensions of the plurality of particles. Those skilled in the art would be capable of selecting an appropriate magnification for imaging the sample. The average largest cross-sectional dimension of the plurality of particles can be determined by taking the longest cross-sectional dimension of each particle and averaging the longest cross-sectional dimensions (e.g., averaging the longest cross-sectional dimensions for 10 particles).

Particles comprising a compound of formula (I) described herein may be formed by heating a mixture of precursors, as described in more detail herein. The mixture of precursors comprising atoms of the elements Li, S, P, and M wherein M is selected from the group consisting of Lanthanides and elements of Group 3, Group 4, Group 5, Group 6, Group 7, Group 8, Group 9, Group 12, Group 13 and Group 14 of the periodic system of elements. In said mixture of precursors said elements are present either in elemental form or in chemically bound form. For instance, Li is typically provided in chemically bound form, for instance in the form of a chemical compound comprising Li and atoms of one or more of the elements S, P, and M (as defined above), e.g. Li₂S. M, P and S may be provided in elemental form.

For example, the mixture of precursors comprises atoms of the elements Li, S, P, and Si, or the mixture of precursors comprises a atoms of the elements Li, S, P, and Ge, or the mixture of precursors comprises atoms of the elements Li, S, P, and Sn.

In some embodiments, at least a portion of the precursors are selected from the group consisting of Li₂S, MSₐ, and P_{b}S_{c}, where a is 0-8, b is 0-2, and c is 0-8 such that b+c is 1 or greater. For example, a is 0-8, b is 1-2, and c is 2-5. Non-limiting examples of suitable precursors include Li₂S, SiS₂, GeS₂, SnS₂, Si, Ge, Sn, S₂, S₄, S₈, P₂S₅, P, and combinations thereof.

In some precursors MSₐ, a is greater than or equal to 0, greater than or equal to 1, greater than or equal to 2, greater than or equal to 3, greater than or equal to 4, greater than or equal to 5, greater than or equal to 6, or greater than or equal to 7. In some precursors MSₐ, a is less than or equal to 8, less than or equal to 7, less than or equal to 6, less than or equal to 5, less than or equal to 4, less than or equal to 3, or less than or equal to 2. Combinations of the above-referenced ranges are also possible (e.g., greater than or equal to 0 and less than or equal to 8, greater than or equal to 1 and less than or equal to 4, greater than or equal to 2 and less than or equal to 6, greater than or equal to 4 and less than or equal to 8). In some cases, a is 0, i.e. the precursor is elemental M.

In certain precursors P_{b}S_{c}, b is greater than or equal to 0, or greater than or equal to 1. In some cases, b may be less than or equal to 2, or less than or equal to 1. Combinations of the above-referenced ranges are also possible (e.g., greater than or equal to 0 and less than or equal to 2). In some cases, b is 0, i.e. the precursor is elemental sulfur. In certain embodiments, b is 1. In some cases, b may be 2.

In some precursors P_{b}S_{c}, c is greater than or equal to 0, greater than or equal to 1, greater than or equal to 2, greater than or equal to 3, greater than or equal to 4, greater than or equal to 5, greater than or equal to 6, or greater than or equal to 7. In certain precursors P_{b}S_{c}, c is less than or equal to 8, less than or equal to 7, less than or equal to 6, less than or equal to 5, less than or equal to 4, less than or equal to 3, or less than or equal to 2. Combinations of the above-referenced ranges are also possible (e.g., greater than or equal to 0 and less than or equal to 8, greater than or equal to 1 and less than or equal to 4, greater than or equal to 2 and less than or equal to 6, greater than or equal to 4 and less than or equal to 8). In certain embodiments, c is 0, i.e. the precursor is elemental phosphor. In some embodiments, c is 1.

In some embodiments, b and c are selected such that b+c is 1 or greater (e.g., 2 or greater, 3 or greater, 4 or greater, 5 or greater, 6 or greater, 7 or greater, 8 or greater, or 9 or greater). In some cases b+c is less than or equal to 10, less than or equal to 9, less than or equal to 8, less than or equal to 7, less than or equal to 6, less than or equal to 5, less than or equal to 4, less than or equal to 3, or less than or equal to 2. Combinations of the above-referenced ranges are also possible.

Preferred mixtures of precursors comprise or consist of xLi₂S, yMSₐ, and zP_{b}S_{c}, where x is 8-16, y is 0.1-6, z is 0.1-3, a is 0-8, b is 0-2, and c is 0-8 such that b+c is 1 or greater. For example, mixture of precursors comprises or consists of xLi₂S, yMSₐ, and zP_{b}S_{c}, and x is 10, y is 1, z is 1, a is 2, b is 2 and c is 5.

Preferably a mixture of precursors described herein has a stoichiometric ratio of the elements Li, S, P, and M as in formula (I), as described above (i.e., Li₂ₓS_{x+w+5z}M_{y}P_{2z}).For instance, Li, S, P, and M have a stoichiometric ratio such that the plurality of particles formed from the mixture comprises a compound of formula (I).

For example, the mixture of precursors are selected such that the ratio of the elements Li, S, P, and M result in the formation of a compound of formula (I) described herein selected from the group consisting of Li₂₀S₁₇MP₂, Li₂₁S_{17.5}SiP₂, Li₂₂S₁₈SiP₂, Li₂₄S₁₉MP₂, and Li₂₈S₂₁MP₂. Other suitable ratios for forming a compound as in formula (I) are also possible. For example, in certain cases, excess sulfur may be present in the mixture (e.g., sulfur in excess of that included in formula (I)). The excess sulfur may, for example, compensate for sulfur loss during mixing. For instance, the mixture of precursors described herein has a stoichiometric ratio of the elements Li₂ₓ, P_{2z}, M_{y}, and S_{d} where x, y, and z are as described above and d is greater than or equal to the sum of x+w+5z, where w is as described above.

For instance, d may be greater than or equal to 15, greater than or equal to 17, greater than or equal to 19, greater than or equal to 21, greater than or equal to 23, greater than or equal to 25, greater than or equal to 30, greater than or equal to 35, greater than or equal to 40, greater than or equal to 45, greater than or equal to 50, greater than or equal to 100, or greater than or equal to 150. For instance, d may be less than or equal to 200, less than or equal to 100, less than or equal to 50, or less than or equal to 45. Combinations of the above referenced ranges are also possible (e.g., greater than or equal to 15 and less than or equal to 200). Other ranges are also possible.

Preferred mixtures of precursors comprise or consist of
- Li₂S, MS₂ (e.g. SiS₂ or GeS₂,) and P₂S₅ or
- Li₂S, M (e.g. Si or Ge), S₈ and P₂S₅, or
- Li₂S, M (e.g. Si or Ge), S₈, and P.

The mixture of precursors as defined above may be heated to any suitable temperature for forming a compound described herein. For instance, the mixture of precursors is heated to a temperature of greater than or equal to 400 °C, greater than or equal to 450 °C, greater than or equal to 500 °C, greater than or equal to 550 °C, greater than or equal to 600 °C, greater than or equal to 650 °C, greater than or equal to 700 °C, or greater than or equal to 750 °C, greater than or equal to 800 °C, or greater than or equal to 850 °C. For instance, the mixture of precursors is heated to a temperature less than or equal to 900 °C, less than or equal to 850 °C, less than or equal to 800 °C, less than or equal to 750 °C, less than or equal to 700 °C, less than or equal to 650 °C, less than or equal to 600 °C, less than or equal to 550 °C, less than or equal to 500 °C, or less than or equal to 450 °C. Combinations of the above-referenced ranges are also possible (e.g., greater than or equal to 400 °C and less than or equal to 900 °C, greater than or equal to 500 °C and less than or equal to 700 °C, greater than or equal to 600 °C and less than or equal to 900 °C). Other ranges are also possible.

The mixture of precursors may be heated for any suitable amount of time. In some cases, the mixture of precursors may be heated for greater than or equal to 3 hours, greater than or equal to 5 hours, greater than or equal to 8 hours, greater than or equal to 12 hours, greater than or equal to 16 hours, or greater than or equal to 20 hours. The mixture of precursors may be heated for less than or equal to 24 hours, less than or equal to 48 hours, less than or equal to 36 hours, less than or equal to 24 hours, less than or equal to 20 hours, less than or equal to 16 hours, less than or equal to 12 hours, less than or equal to 8 hours, or less than or equal to 5 hours. Combinations of the above referenced ranges are also possible (e.g., greater than or equal to 3 hours and less than or equal to 24 hours, greater than or equal to 5 hours and less than or equal to 12 hours, greater than or equal to 8 hours and less than or equal to 20 hours, greater than or equal to 12 hours and less than or equal to 24 hours). Other ranges are also possible.

The mixture of precursors may be heated at any suitable pressure. In some cases, the mixture of precursors is heated at a relatively low pressure. For example, the mixture of precursors is heated at a pressure of between 0.1 MPa and 0.3 MPa, or at other suitable pressures.

After heating the mixture of precursors, the mixture may be cooled. For example, the mixture of precursors may be heated to a temperature between 400 °C and 900 °C, preferably to a temperature ranging from 400 °C to 800 °C, for between 3 hours to 24 hours, and the mixture may be cooled to a temperature less than 400 °C such as room temperature.

The mixture may then be ground into a plurality of particles of desired size. Those skilled in the art would be capable of selecting suitable methods for grinding a material into particles including, for example, ball milling or blender crushing. The mixture of precursors may be ground in a ball mill prior to and/or during heating. In some cases, the grinding of the plurality of particles is conducted at relative low pressures. For example, the grinding of the plurality of particles may be conducted at pressures less than or equal to 1 GPa, less than or equal to 500 MPa, less than or equal to 100 MPa, less than or equal to 50 MPa, less than or equal to 10 MPa, less than or equal to 5 MPa, less than or equal to 1 MPa, or less than or equal to 0.5 MPa. The grinding of the plurality of particles may be conducted at pressures of at least 0.1 MPa, at least 0.5 MPa, at least 1 MPa, at least 5 MPa, at least 10 MPa, at least 50 MPa, at least 100 MPa, or at least 500 MPa. Combinations of the above-referenced ranges are also possible (e.g., at least 0.1 MPa and less than or equal to 1 GPa). Other ranges are also possible.

In certain methods of forming an article according to the present invention (as defined above), a compound of formula (I) is deposited as a layer, e.g. a plurality of particles comprising the compound of formula (I) are deposited as a layer (e.g., in an electrochemical cell).

A layer comprising a compound of formula (I) may be deposited on a surface (e.g., on another layer) by any suitable method such as sputtering (e.g., magnetron sputtering), ion beam deposition, molecular beam epitaxy, electron beam evaporation, vacuum thermal evaporation, aerosol deposition, sol-gel, laser ablation, chemical vapor deposition (CVD), thermal evaporation, plasma enhanced chemical vacuum deposition (PECVD), laser enhanced chemical vapor deposition, jet vapor deposition, etc. For instance a layer comprising a compound described herein is made by cold pressing. The technique used may depend on the desired thickness of the layer, the material being deposited on, etc. The compound of formula (I) may be deposited in powder form, in some cases. The particles comprising the compound of formula (I) may be deposited on a surface and sintered.

In certain methods of forming an article according to the present invention the layer comprising the compound of formula (I) is deposited on an electrode/electroactive material (e.g., an anode, a cathode), on a separator, a protective layer, an electrolyte layer, or another layer of an electrochemical cell.

In certain articles according to the present invention, a layer comprising the compound of formula (I), or a plurality of particles comprising the compound of formula (I) as described herein, is substantially crystalline. For instance, the layer comprising the compound of formula (I), or a plurality of particles comprising the compound of formula (I) as described herein, is between 1 wt.% and 100 wt.% crystalline. That is to say the crystalline fraction of the compound of formula (I) comprised by the layer (or particles) is in the range of 1% to 100% based on the total weight of the compound of formula (I) comprised by the layer (or particles). Herein, the layer comprising the compound of formula (I), or a plurality of particles comprising the compound of formula (I) as described herein, is greater than or equal to 1 wt.%, greater than or equal to 2 wt.%, greater than or equal to 5 wt.%, greater than or equal to 10 wt.%, greater than or equal to 20 wt.%, greater than or equal to 25 wt.%, greater than or equal to 50 wt.%, greater than or equal to 75 wt.%, greater than or equal to 90 wt.%, greater than or equal to 95 wt.%, greater than or equal to 98 wt.%, greater than or equal to 99 wt.%, or greater than or equal to 99.9 wt.% crystalline. Herein, the layer comprising the compound of formula (I), or a plurality of particles comprising the compound of formula (I) as described herein, is less than or equal to 99.9 wt.%, less than or equal to 98 wt.%, less than or equal to 95 wt.%, less than or equal to 90 wt.%, less than or equal to 75 wt.%, less than or equal to 50 wt.%, less than or equal to 25 wt.%, less than or equal to 20 wt.%, less than or equal to 10 wt.%, less than or equal to 5 wt.%, or less than or equal to 2 wt.% crystalline.

In certain articles according to the present invention, a layer comprising the compound of formula (I), or a plurality of particles comprising the compound of formula (I) as described herein, is greater than or equal to 99.2 wt.%, greater than or equal to 99.5 wt.%, greater than or equal to 99.8 wt.%, or greater than or equal to 99.9 wt.% crystalline. In some cases, a layer comprising the compound of formula (I), or a plurality of particles comprising the compound of formula (I) as described herein, may be 100% crystalline. Combinations of the above referenced ranges are also possible (e.g., greater than or equal to 1 wt.% and less than or equal to 100 wt.%, greater than or equal to 50 wt.% and less than or equal to 100 wt.%).

In certain articles according to the present invention, the compound of formula (I) has a cubic crystal structure. Unless indicated otherwise, the crystal structure and/or percent crystallinity as used herein is determined by x-ray diffraction crystallography at a wavelength of 1.541 nm using a synchrotron of particles comprising the compound. In some instances, Raman spectroscopy may be used.

In other articles according to the present invention, the layer comprising the compound of formula (I), or a plurality of particles comprising the compound of formula (I) as described herein, is at least partially amorphous.

A compound of formula (I) may be present in a layer (e.g., a separator, a protective layer) in an amount of at least 1 wt%, at least 2 wt%, at least 5 wt%, at least 10 wt%, at least 20 wt%, 30 wt%, at least 40 wt%, at least 50 wt%, at least 60 wt%, at least 70 wt%, at least 80 wt%, at least 85 wt%, at least 90 wt%, at least 95 wt%, or at least 98 wt% versus the total layer weight. the compound of formula (I) may be present in the layer in an amount of less than or equal to 100 wt%, less than or equal to 99 wt%, less than or equal to 98 wt%, less than or equal to 95 wt%, less than or equal to 90 wt%, less than or equal to 85 wt%, less than or equal to 80 wt%, less than or equal to 70 wt%, less than or equal to 60 wt%, less than or equal to 50 wt%, less than or equal to 40 wt%, less than or equal to 30 wt%, less than or equal to 20 wt%, less than or equal to 10 wt%, less than or equal to 5 wt%, or less than or equal to 2 wt% versus the total layer weight. Combinations of the above-referenced ranges are also possible (e.g., at least 1 wt% and less than or equal to 100 wt%). Other ranges are also possible.

The layer may comprise a compound of formula (I) and one or more additional materials (e.g., polymers, metals, ceramics, ionically-conductive materials) as described in more detail, below.

One or more layers of an electrochemical cell may comprise a compound of formula (I). In some cases, the compound in the one or more layers is in the form of a plurality of particles. In some articles and electrochemical cells according to the present invention, the layer comprising the compound of formula (I) is in direct contact with an electrode (e.g., an electroactive material of the electrode).

A layer comprising the compound of formula (I) may allow ions (e.g., electrochemically active ions, such as lithium ions) to pass through the layer but may substantially impede electrons from passing across the layer. By "substantially impedes", in this context, it is meant that the layer allows lithium ion flux greater than or equal to ten times greater than electron passage. Advantageously, particles and layers described herein (e.g., comprising the compound of formula (I)) may be capable of conducting specific cations (e.g., lithium cations) while not conducting certain anions (e.g., polysulfide anions) and/or may be capable of acting as a barrier to an electrolyte and/or a component in the electrolyte (e.g., a polysulfide species) for the electrode.

In some articles and electrochemical cells according to the present invention, the layer (e.g., a separator, a protective layer, a solid electrolyte layer) comprising a compound of formula (I) is ionically conductive. For example, the average ionic conductivity of the layer comprising a compound of formula (I) is greater than or equal to 10⁻⁵ S/cm, greater than or equal to 10⁻⁴ S/cm, greater than or equal to 10⁻³ S/cm, greater than or equal to 10⁻² S/cm, greater than or equal to 10⁻¹ S/cm. The average ionic conductivity of the layer comprising the ionically conductive compound of formula (I) may be less than or equal to 1 S/cm, less than or equal to 10⁻¹ S/cm, less than or equal to 10⁻² S/cm, less than or equal to 10⁻³ S/cm, or less than or equal to 10⁻⁴ S/cm. Combinations of the above-referenced ranges are also possible (e.g., an average ionic conductivity of greater than or equal to 10⁻⁵ S/cm and less than or equal to 10⁻¹ S/cm). Other ion conductivity is also possible.

The average ion conductivity of the layer comprising the ionically conductive compound of formula (I) can be determined by pressing the layer between two copper cylinders at a pressure of up to 3 tons/cm².The average ion conductivity (i.e., the inverse of the average resistivity) can be measured at 500 kg/cm² increments using a conductivity bridge (i.e., an impedance measuring circuit) operating at 1 kHz. Sometimes the pressure is increased until changes in average ion conductivity are no longer observed in the sample. Conductivity may be measured at room temperature (e.g., 25 °C).

As described herein, it may be desirable to determine if a layer including a compound described herein has advantageous properties as compared to a layer formed of other materials for particular electrochemical systems. Simple screening tests can be employed to help select between candidate materials. One simple screening test includes positioning a layer (e.g., comprising the compound of formula (I)) in an electrochemical cell, e.g., as a protective layer in a cell. The electrochemical cell may then undergo multiple discharge/charge cycles, and the electrochemical cell may be observed for whether inhibitory or other destructive behavior occurs compared to that in a control system. If inhibitory or other destructive behavior is observed during cycling of the cell, as compared to the control system, it may be indicative of degradation or other failure of the layer in question, within the assembled electrochemical cell. It is also possible to evaluate the electrical conductivity and/or ion conductivity of the layer using methods described herein and known to one of ordinary skill in the art. The measured values may be compared to select between candidate materials and may be used for comparison with baseline material(s) in the control.

It may be desirable to test the layer (e.g., a layer comprising the compound of formula (I)) for swelling in the presence of a particular electrolyte or solvent to be used in an electrochemical cell. A simple screening test may involve, for example, pieces of the layer that are weighed and then placed in a solvent or an electrolyte to be used in an electrochemical cell for any suitable amount of time (e.g., 24 hours). The percent difference in weight (or volume) of the layer before and after the addition of a solvent or an electrolyte may determine the amount of swelling of the layer in the presence of the electrolyte or the solvent.

Another simple screening test may involve determining the stability (i.e., integrity) of a layer (e.g., a layer comprising the compound of formula (I)) to polysulfides. Briefly, the layer may be exposed to a polysulfide solution/mixture for any suitable amount of time (e.g., 72 hours) and the percent weight loss of the layer after exposure to the polysulfide solution may be determined by calculating the difference in weight of the layer before and after the exposure. For example, the percent weight loss of the layer after exposure to the polysulfide solution may be less than or equal to 15 wt.%, less than or equal to 10 wt.%, less than or equal to 5 wt.%, less than or equal to 2 wt.%, less than or equal to 1 wt.%, or less than or equal to 0.5 wt.%. The percent weight loss of the layer after exposure to the polysulfide solution may be greater than or equal to 0.1 wt.%, greater than or equal to 0.5 wt.%, greater than or equal to 1 wt.%, greater than or equal to 2 wt.%, greater than or equal to 5 wt.%, or greater than or equal to 10 wt.%. Combinations of the above-referenced ranges are also possible (e.g., greater than or equal to 0.1 wt.% and less than or equal to 5 wt.%).

Yet another simple screening test may involve determining the stability (i.e. integrity) of a layer (e.g., a layer comprising the compound of formula (I)) to metallic lithium. Briefly, a layer or a pellet comprising the compound of formula (I) may be placed between two lithium metal foils in an electrochemical cell and one can measure the change in impedance over any suitable amount of time (e.g., 72 hours). In general, the lower impedance may result in a greater stability of the layer to metallic lithium.

The above described screening tests may also be adapted and used to determine the properties of individual components of the layer (e.g., a plurality of particles comprising the compound of formula (I)).

In an article according to the present invention, one or more compounds of formula (I) described herein may be incorporated into a separator. Generally, a separator is interposed between a cathode and an anode in an electrochemical cell. The separator may separate or insulate the anode and the cathode from each other preventing short circuiting, and may permit the transport of ions between the anode and the cathode. The separator may be porous, wherein the pores may be partially or substantially filled with electrolyte. Separators may be supplied as porous free standing films which are interleaved with the anodes and the cathodes during the fabrication of cells. Alternatively, the separator layer may be applied directly to the surface of one of the electrodes.

In some cases, an article that can be incorporated into an electrochemical cell includes an electrode (e.g., an anode or a cathode) that comprises an electroactive material and a separator adjacent the electrode. Herein, the separator preferably comprises one or more compounds of formula (I) and/or a plurality of particles comprising one or more compounds of formula (I). However, other materials can also be used to form the separator. The electrode may include an electroactive material (e.g., an anode active electrode material, a cathode active electrode material), described in more detail below.

In some cases, an article or an electrochemical cell comprises an electrolyte. In some cases, a separator is located between the electrolyte and an electrode (e.g., an anode, a cathode). For example, an article includes an electrode (e.g., an anode or a cathode) that comprises an electroactive material, an electrolyte adjacent the electrode, and a separator adjacent the electrolyte. The electrolyte can function as a medium for the storage and transport of ions. The electrolyte may have any suitable configuration such as a liquid electrolyte, a solid electrolyte, or a gel polymer electrolyte, as described in more detail herein.

In some articles and electrochemical cells, the separator comprises a polymeric material (e.g., polymeric material that does or does not swell upon exposure to electrolyte). The separator may include one or more compounds (or plurality of particles comprising one or more compounds) of formula (I). In certain articles and electrochemical cells, the compound of formula (I) is directly deposited on at least a portion of a surface of the separator. In certain articles and electrochemical cells, the compound of formula (I) is incorporated into the separator.

The separator can be configured to inhibit (e.g., prevent) physical contact between a first electrode and a second electrode, which could result in short circuiting of the electrochemical cell. The separator can be configured to be substantially electronically non-conductive, which can inhibit the degree to which the separator causes short circuiting of the electrochemical cell. All or portions of the separator can be formed of a material with a bulk electronic resistivity of greater than or equal to 10⁴, greater than or equal to 10⁵, greater than or equal to 10¹⁰, greater than or equal to 10¹⁵, or greater than or equal to 10²⁰ Ohm-meters. The bulk electronic resistivity may be less than or equal to 10⁵⁰ Ohm-meters. Bulk electronic resistivity may be measured at room temperature (e.g., 25 °C).

The separator can be a solid. The separator may be porous to allow an electrolyte solvent to pass through it. In some cases, the separator does not substantially include a solvent (like in a gel), except for solvent that may pass through or reside in the pores of the separator. In other cases, a separator may be in the form of a gel.

A separator can be made of a variety of materials. In some cases the separator comprises one or more compounds of formula (I). Additional or alternatively, the separator may comprise a suitable separator material such as a polymer material. Examples of suitable polymer materials include, but are not limited to, polyolefins (e.g., polyethylenes, poly(butene-1), poly(n-pentene-2), polypropylene, polytetrafluoroethylene), polyamines (e.g., poly(ethylene imine) and polypropylene imine (PPI)); polyamides (e.g., polyamide (Nylon), poly(ε-caprolactam) (Nylon 6), poly(hexamethylene adipamide) (Nylon 66)), polyimides (e.g., polyimide, polynitrile, and poly(pyromellitimide-1,4-diphenyl ether) (Kapton®) (NOMEX®) (KEVLAR®)); polyether ether ketone (PEEK); vinyl polymers (e.g., polyacrylamide, poly(2-vinyl pyridine), poly(N-vinylpyrrolidone), poly(methylcyanoacrylate), poly(ethylcyanoacrylate), poly(butylcyanoacrylate), poly(isobutylcyanoacrylate), poly(vinyl acetate), poly (vinyl alcohol), poly(vinyl chloride), poly(vinyl fluoride), poly(2-vinyl pyridine), vinyl polymer, polychlorotrifluoro ethylene, and poly(isohexylcynaoacrylate)); polyacetals; polyesters (e.g., polycarbonate, polybutylene terephthalate, polyhydroxybutyrate); polyethers (poly(ethylene oxide) (PEO), poly(propylene oxide) (PPO), poly(tetramethylene oxide) (PTMO)); vinylidene polymers (e.g., polyisobutylene, poly(methyl styrene), poly(methylmethacrylate) (PMMA), poly(vinylidene chloride), and poly(vinylidene fluoride)); polyaramides (e.g., poly(imino-1,3-phenylene iminoisophthaloyl) and poly(imino-1,4-phenylene iminoterephthaloyl)); polyheteroaromatic compounds (e.g., polybenzimidazole (PBI), polybenzobisoxazole (PBO) and polybenzobisthiazole (PBT)); polyheterocyclic compounds (e.g., polypyrrole); polyurethanes; phenolic polymers (e.g., phenol-formaldehyde); polyalkynes (e.g., polyacetylene); polydienes (e.g., 1,2-polybutadiene, cis or trans-1,4-polybutadiene); polysiloxanes (e.g., poly(dimethylsiloxane) (PDMS), poly(diethylsiloxane) (PDES), polydiphenylsiloxane (PDPS), and polymethylphenylsiloxane (PMPS)); and inorganic polymers (e.g., polyphosphazene, polyphosphonate, polysilanes, polysilazanes). Preferably, the polymer may be selected from poly(n-pentene-2), polypropylene, polytetrafluoroethylene, polyamides (e.g., polyamide (Nylon), poly(ε-caprolactam) (Nylon 6), poly(hexamethylene adipamide) (Nylon 66)), polyimides (e.g., polynitrile, and poly(pyromellitimide-1,4-diphenyl ether) (Kapton®) (NOMEX®) (KEVLAR®)), polyether ether ketone (PEEK), and combinations thereof.

The mechanical and electronic properties (e.g., conductivity, resistivity) of these polymers are known. Accordingly, those of ordinary skill in the art can choose suitable materials based on their mechanical and/or electronic properties (e.g., ionic and/or electronic conductivity/resistivity), and/or can modify such polymers to be ionically conducting (e.g., conductive towards single ions) based on knowledge in the art, in combination with the description herein. For example, the polymer materials listed above and herein may further comprise salts, for example, lithium salts (e.g., LiSCN, LiBr, Lil, LiClO₄ LiAsF₆, LiSO₃CF₃, LiSO₃CH₃, LiBF₄, LiB(Ph)₄, LiPF₆, LiC(SO₂CF₃)₃, and LiN(SO₂CF₃)₂), and/or the ionically conductive compound of formula (I) to enhance ionic conductivity, if desired.

The separator may be porous. For example, the separator pore size may be, for example, .less than or equal to 5 µm, less than or equal to 3 µm, less than or equal to 2 µm, less than or equal to 1 µm, less than or equal to 500 nm, less than or equal to 300 nm, less than or equal to 100 nm, or less than or equal to 50 nm. For example, the pore size may be greater than or equal to 50 nm, greater than or equal to 100 nm, greater than or equal to 300 nm, greater than or equal to 500 nm, or greater than or equal to 1 µm. Other values are also possible. Combinations of the above-noted ranges are also possible (e.g., a pore size of less than 300 nm and greater than or equal to 100 nm).

The porosity of the separator can be, for example, greater than or equal to 30 vol%, greater than or equal to 40 vol%, greater than or equal to 50%, greater than or equal to 60 vol%, greater than or equal to 70 vol%, greater than or equal to 80 vol%, or greater than or equal to 90 vol%. For example, the porosity is less than or equal to 90 vol%, less than or equal to 80 vol%, less than or equal to 70 vol%, less than or equal to 60 vol%, less than or equal to 50 vol%, less than or equal to 40 vol%, or less than or equal to 30 vol%. Other porosities are also possible. Combinations of the above-noted ranges are also possible. Porosity as used herein refers to the fraction of a volume of voids in a layer divided by the total volume of the layer and is measured using mercury porosimetry.

In other cases, the separator may be substantially non-porous.

The average thickness of the separator or other layers described herein is determined by scanning electron microscopy (SEM). Briefly, the layer can be imaged along a cross-section (e.g., by cutting the layer) after formation and the image may be acquired by SEM. The average thickness may be determined by taking an average of the thickness of the sample at several different locations along the cross-section (e.g., at least 10 locations). Those skilled in the art would be capable of selecting an appropriate magnification for imaging the sample.

In certain articles according to the present invention, a protective layer may comprise a compound of formula (I) and/or a plurality of particles comprising a compound of formula (I). In some cases, a protective layer that incorporates the ionically conductive compounds described herein is substantially impermeable to the electrolyte. The protective layer may be configured such that it is unswollen in the presence of the electrolyte. However, in other cases, at least a portion of the protective layer can be swollen in the presence of the electrolyte. The protective layer may, in some cases, be substantially non-porous. The protective layer may be positioned directly adjacent an electrode, or adjacent the electrode via an intervening layer (e.g., another protective layer). For instance, an article according to the present invention comprises an electrode, a protective layer disposed on or adjacent at least a portion of the active surface of said electrode, and an optional electrolyte. A second protective layer adjacent said protective layer disposed on or adjacent at least a portion of the electrode active surface may be present. At least one or both of protective layer and the second protective layer includes an ion-conductive layer comprising the ionically conductive compound of formula (I). Other configurations are also possible.

The protective layer may have any suitable thickness. The protective layer described herein may have a thickness of greater than or equal to 1 nm, greater than or equal to 2 nm, greater than or equal to 5 nm, greater than or equal to 10 nm, greater than or equal to 20 nm, greater than or equal to 50 nm, greater than or equal to 100 nm, greater than or equal to 500 nm, greater than or equal to 1 µm, greater than or equal to 2 µm, or greater than or equal to 5 µm. The protective layer may have a thickness of less than or equal to 10 µm, less than or equal to 5 µm, less than or equal to 2 µm, less than or equal to 1 µm, less than or equal to 500 nm, less than or equal to 100 nm, less than or equal to 50 nm, less than or equal to 20 nm, less than or equal to 10 nm, less than or equal to 5 nm, or less than or equal to 2 nm. Other values are also possible. Combinations of the above-noted ranges are also possible.

Although in some articles and electrochemical cells according to the present invention the protective layer is an ion-conductive layer comprising one or more compounds of formula (I), other materials may also be used in addition to, or alternatively to, the compound of formula (I) to form the protective layer. Additionally, where more than one protective layer may be present, each of the layers may independently formed of one or more materials described herein. For instance, the protective layer comprises a ceramic and/or a glass (e.g., an ion conducting ceramic/glass conductive to lithium ions). Suitable glasses and/or ceramics include, but are not limited to, those that may be characterized as containing a "modifier" portion and a "network" portion, as known in the art. The modifier may include a metal oxide of the metal ion conductive in the glass or ceramic. The network portion may include a metal chalcogenide such as, for example, a metal oxide or sulfide. For lithium metal and other lithium-containing electrodes, an ion conductive layer may be lithiated or contain lithium to allow passage of lithium ions across it. Ion conductive layers may include layers comprising a material such as lithium nitrides, lithium silicates, lithium borates, lithium aluminates, lithium phosphates, lithium phosphorus oxynitrides, lithium silicosulfides, lithium germanosulfides, lithium oxides (e.g., Li₂O, LiO, LiO₂, LiRO₂, where R is a rare earth metal), lithium lanthanum oxides, lithium lanthanum zirconium oxides, lithium titanium oxides, lithium borosulfides, lithium aluminosulfides, lithium phosphates, and lithium phosphosulfides, and combinations thereof. The selection of the material will be dependent on a number of factors including, but not limited to, the properties of electrolyte, anode, and cathode used in the cell.

In some articles according to the present invention, the protective layer is a non-electroactive metal layer. The non-electroactive metal layer may comprise a metal alloy layer, e.g., a lithiated metal layer especially in the case where a lithium anode is employed. The lithium content of the metal alloy layer may vary from 0.5% by weight to 20% by weight, depending, for example, on the specific choice of metal, the desired lithium ion conductivity, and the desired flexibility of the metal alloy layer. Suitable metals for use in the ion conductive material include, but are not limited to, Al, Zn, Mg, Ag, Pb, Cd, Bi, Ga, In, Ge, Sb, As, and Sn. Sometimes, a combination of metals, such as the ones listed above, may be used in an ion conductive material.

In other articles according to the present invention, the protective layer is a polymer layer or a layer that comprises a polymeric material. In some such articles, the ionically conductive compound of formula (I) is incorporated into the polymer layer. Suitable polymer layers for use in electrochemical cells may be, for example, highly conductive towards lithium and minimally conductive towards electrons. Such polymers include, for example, ionically conductive polymers, sulfonated polymers, and hydrocarbon polymers. The selection of the polymer will be dependent upon a number of factors including the properties of electrolyte, anode, and cathode used in the cell. Suitable ionically conductive polymers include, e.g., ionically conductive polymers known to be useful in solid polymer electrolytes and gel polymer electrolytes for lithium electrochemical cells, such as, for example, polyethylene oxides. Suitable sulfonated polymers include, e.g., sulfonated siloxane polymers, sulfonated polystyrene-ethylene-butylene polymers, and sulfonated polystyrene polymers. Suitable hydrocarbon polymers include, e.g., ethylene-propylene polymers, polystyrene polymers, and the like.

Polymer layers can also include crosslinked polymer materials formed from the polymerization of monomers such as alkyl acrylates, glycol acrylates, polyglycol acrylates, polyglycol vinyl ethers, and polyglycol divinyl ethers. For example, one such crosslinked polymer material is polydivinyl poly(ethylene glycol). The crosslinked polymer materials may further comprise salts, for example, lithium salts, to enhance ionic conductivity. Preferably, the polymer layer comprises a crosslinked polymer.

Other classes polymers that may be suitable for use in a polymer layer include, but are not limited to, polyamines (e.g., poly(ethylene imine) and polypropylene imine (PPI)); polyamides (e.g., polyamide (Nylon), poly(ε-caprolactam) (Nylon 6), poly(hexamethylene adipamide) (Nylon 66)), polyimides (e.g., polyimide, polynitrile, and poly(pyromellitimide-1,4-diphenyl ether) (Kapton)); vinyl polymers (e.g., polyacrylamide, poly(2-vinyl pyridine), poly(N-vinylpyrrolidone), poly(methylcyanoacrylate), poly(ethylcyanoacrylate), poly(butylcyanoacrylate), poly(isobutylcyanoacrylate), poly(vinyl acetate), poly (vinyl alcohol), poly(vinyl chloride), poly(vinyl fluoride), poly(2-vinyl pyridine), vinyl polymer, polychlorotrifluoro ethylene, and poly(isohexylcynaoacrylate)); polyacetals; polyolefins (e.g., poly(butene-1), poly(n-pentene-2), polypropylene, polytetrafluoroethylene); polyesters (e.g., polycarbonate, polybutylene terephthalate, polyhydroxybutyrate); polyethers (poly(ethylene oxide) (PEO), poly(propylene oxide) (PPO), poly(tetramethylene oxide) (PTMO)); vinylidene polymers (e.g., polyisobutylene, poly(methyl styrene), poly(methylmethacrylate) (PMMA), poly(vinylidene chloride), and poly(vinylidene fluoride)); polyaramides (e.g., poly(imino-1,3-phenylene iminoisophthaloyl) and poly(imino-1,4-phenylene iminoterephthaloyl)); polyheteroaromatic compounds (e.g., polybenzimidazole (PBI), polybenzobisoxazole (PBO) and polybenzobisthiazole (PBT)); polyheterocyclic compounds (e.g., polypyrrole); polyurethanes; phenolic polymers (e.g., phenol-formaldehyde); polyalkynes (e.g., polyacetylene); polydienes (e.g., 1,2-polybutadiene, cis or trans-1,4-polybutadiene); polysiloxanes (e.g., poly(dimethylsiloxane) (PDMS), poly(diethylsiloxane) (PDES), polydiphenylsiloxane (PDPS), and polymethylphenylsiloxane (PMPS)); and inorganic polymers (e.g., polyphosphazene, polyphosphonate, polysilanes, polysilazanes). The mechanical and electronic properties (e.g., conductivity, resistivity) of these polymers are known. Accordingly, those of ordinary skill in the art can choose suitable polymers for use in lithium batteries, e.g., based on their mechanical and/or electronic properties (e.g., ionic and/or electronic conductivity), and/or can modify such polymers to be ionically conducting (e.g., conductive towards single ions) and/or electronically conducting based on knowledge in the art, in combination with the description herein. For example, the polymer materials listed above may further comprise salts, for example, lithium salts (e.g., LiSCN, LiBr, Lil, LiClO₄ LiAsF₆, LiSO₃CF₃, LiSO₃CH₃, LiBF₄, LiB(Ph)₄, LiPF₆, LiC(SO₂CF₃)₃, and LiN(SO₂CF₃)₂), to enhance ionic conductivity.

The polymeric materials can be selected or formulated to have suitable physical/mechanical characteristics by, for example, tailoring the amounts of components of polymer blends, adjusting the degree of cross-linking (if any), etc.

In some articles according to the present invention, a composite layer comprises a polymer material and an ionically conductive compound of formula (I). Such a composite layer may be formed by any suitable method including, for example: co-spraying (e.g., via aerosol deposition) the polymer material and a compound of formula (I) onto a substrate; casting the composite layer from a slurry, solution, or suspension comprising the polymer material and a compound of formula (I); pressing particles comprising a ionically conductive compound of formula (I) into a polymer layer comprising a polymer material; and/or filling pores of a layer comprising a compound of formula (I) with a polymer material. Other methods for forming composite layers are also possible and are generally known in the art. The composite layer may be used for any suitable component of an article or electrochemical cell described herein, such as a protective layer. These and other methods for forming such composite layers are described in more detail in U.S. Provisional Patent Application No. 62/164,200, filed May 20, 2015 and entitled "Protective Layers for Electrodes," which is incorporated herein by reference in its entirety.

As described herein, certain articles and electrochemical cells according to the present invention comprise an electrolyte. The electrolytes used in electrochemical or battery cells can function as a medium for the storage and transport of ions, and in the special case of solid electrolytes and gel electrolytes, these materials may additionally function as a separator between the anode and the cathode. Any suitable liquid, solid, or gel material capable of storing and transporting ions may be used, so long as the material facilitates the transport of ions (e.g., lithium ions) between the anode and the cathode. The electrolyte may be electronically non-conductive to prevent short circuiting between the anode and the cathode. In some embodiments, the electrolyte may comprise a non-solid electrolyte.

For example an electrolyte is in the form of a layer having a particular thickness. An electrolyte layer may have a thickness of, for example, greater than or equal to 1 µm, greater than or equal to 5 µm, greater than or equal to 10 µm, greater than or equal to 15 µm, greater than or equal to 20 µm, greater than or equal to 25 µm, greater than or equal to 30 µm, greater than or equal to 40 µm, greater than or equal to 50 µm, greater than or equal to 70 µm, greater than or equal to 100 µm, greater than or equal to 200 µm, greater than or equal to 500 µm, or greater than or equal to 1 mm. The thickness of the electrolyte layer may be less than or equal to 1 mm, less than or equal to 500 µm, less than or equal to 200 µm, less than or equal to 100 µm, less than or equal to 70 µm, less than or equal to 50 µm, less than or equal to 40 µm, less than or equal to 30 µm, less than or equal to 20 µm, less than or equal to 10 µm, or less than or equal to 50 µm. Other values are also possible. Combinations of the above-noted ranges are also possible.

The electrolyte sometimes includes a non-aqueous electrolyte. Suitable non-aqueous electrolytes may include organic electrolytes such as liquid electrolytes, gel polymer electrolytes, and solid polymer electrolytes. These electrolytes may optionally include one or more ionic electrolyte salts (e.g., to provide or enhance ionic conductivity) as described herein. Examples of useful non-aqueous liquid electrolyte solvents include, but are not limited to, non-aqueous organic solvents, such as, for example, N-methyl acetamide, acetonitrile, acetals, ketals, esters (e.g., esters of carbonic acid), carbonates (e.g., ethylene carbonate, dimethyl carbonate), sulfones, sulfites, sulfolanes, suflonimidies (e.g., bis(trifluoromethane)sulfonimide lithium salt), aliphatic ethers, acyclic ethers, cyclic ethers, glymes, polyethers, phosphate esters (e.g., hexafluorophosphate), siloxanes, dioxolanes, N-alkylpyrrolidones, nitrate containing compounds, substituted forms of the foregoing, and blends thereof. Examples of acyclic ethers that may be used include, but are not limited to, diethyl ether, dipropyl ether, dibutyl ether, dimethoxymethane, trimethoxymethane, 1,2-dimethoxyethane, diethoxyethane, 1,2-dimethoxypropane, and 1,3-dimethoxypropane. Examples of cyclic ethers that may be used include, but are not limited to, tetrahydrofuran, tetrahydropyran, 2-methyltetrahydrofuran, 1,4-dioxane, 1,3-dioxolane, and trioxane. Examples of polyethers that may be used include, but are not limited to, diethylene glycol dimethyl ether (diglyme), triethylene glycol dimethyl ether (triglyme), tetraethylene glycol dimethyl ether (tetraglyme), higher glymes, ethylene glycol divinyl ether, diethylene glycol divinyl ether, triethylene glycol divinyl ether, dipropylene glycol dimethyl ether, and butylene glycol ethers. Examples of sulfones that may be used include, but are not limited to, sulfolane, 3-methyl sulfolane, and 3-sulfolene. Fluorinated derivatives of the foregoing are also useful as liquid electrolyte solvents.

In some cases, mixtures of the solvents described herein may also be used. For example, mixtures of solvents are selected from the group consisting of 1,3-dioxolane and dimethoxyethane, 1,3-dioxolane and diethyleneglycol dimethyl ether, 1,3-dioxolane and triethyleneglycol dimethyl ether, and 1,3-dioxolane and sulfolane. The weight ratio of the two solvents in the mixtures may range, in some cases, from 5 wt.% : 95 wt.% to 95 wt.% : 5 wt.%.

Non-limiting examples of suitable gel polymer electrolytes include polyethylene oxides, polypropylene oxides, polyacrylonitriles, polysiloxanes, polyimides, polyphosphazenes, polyethers, sulfonated polyimides, perfluorinated membranes (NAFION resins), polydivinyl polyethylene glycols, polyethylene glycol diacrylates, polyethylene glycol dimethacrylates, derivatives of the foregoing, copolymers of the foregoing, cross-linked and network structures of the foregoing, and blends of the foregoing.

In some examples, the non-aqueous electrolyte comprises at least one lithium salt. For example, in some cases, the at least one lithium salt is selected from the group consisting of LiNO₃, LiPF₆, LiBF₄, LiClO₄ LiAsF₆, Li₂SiF₆, LiSbF₆, LiAlCl₄, lithium bis-oxalatoborate, LiCF₃SO₃, LiN(SO₂F)₂, LiC(CₙF₂ₙ₊₁SO₂)₃, wherein n is an integer in the range of from 1 to 20, and (CₙF₂ₙ₊₁SO₂)ₘQLi with n being an integer in the range of from 1 to 20, m being 1 when Q is selected from oxygen or sulfur, m being 2 when X is selected from nitrogen or phosphorus, and m being 3 when Q is selected from carbon or silicon.

In some articles and electrochemical cells, the electrolyte is a solid electrolyte layer comprising an ionically conductive compound of formula (I). For instance, an article according to the present invention comprises an electrode (e.g., an anode or a cathode) and a solid electrolyte in direct contact with said electrode, or an article according to the present invention comprises a first electrode (e.g., a cathode) and a second electrode (e.g., an anode) in direct contact a with solid electrolyte at a surface of the first electrode and a surface of the second electrode, respectively.

The solid electrolyte may, for example, replace an organic or non-aqueous liquid electrolyte in an electrochemical cell.

Non-limiting examples of other materials that may be suitable for a solid polymer electrolyte include polyethers, polyethylene oxides, polypropylene oxides, polyimides, polyphosphazenes, polyacrylonitriles, polysiloxanes, derivatives of the foregoing, copolymers of the foregoing, cross-linked and network structures of the foregoing, and blends of the foregoing.

A solid electrolyte layer (e.g., a solid electrolyte layer comprising one or more compounds of formula (I)) may have any suitable thickness. For example, the solid electrolyte layer has a thickness of greater than or equal to 5 nm, greater than or equal to 10 nm, greater than or equal to 20 nm, greater than or equal to 50 nm, greater than or equal to 100 nm, greater than or equal to 200 nm, greater than or equal to 500 nm, greater than or equal to 1 µm, greater than or equal to 5 µm, greater than or equal to 10 µm, greater than or equal to 15 µm, greater than or equal to 20 µm, greater than or equal to 25 µm, greater than or equal to 30 µm, or greater than or equal to 40 µm. For example, the thickness of the solid electrolyte layer is less than or equal to 50 µm, less than or equal to 40 µm, less than or equal to 30 µm, less than or equal to 20 µm, less than or equal to 10 µm, less than or equal to 5 µm, less than or equal to 1 µm, less than or equal to 500 nm, less than or equal to 200 nm, less than or equal to 100 nm, less than or equal to 50 nm, less than or equal to 20 nm, or less than or equal to 10 nm. Other values are also possible. Combinations of the above-noted ranges are also possible (e.g., greater than or equal to 10 nm and less than or equal to 50 µm, greater than or equal to 10 nm and less than or equal to 1 µm, greater than or equal to 100 nm and less than or equal to 2 µm, greater than or equal to 500 nm and less than or equal to 10 µm, greater than or equal to 1 um and less than or equal to 25 µm, greater than or equal to 15 um and less than or equal to 40 µm, greater than or equal to 25 µm and less than or equal to 50 µm).

An electrode described herein may be a cathode (e.g., a cathode of an electrochemical cell). In some articles and electrochemical cells according to the present invention, an electrode such as a cathode comprises a compound of formula (I). In some articles and electrochemical cells according to the present invention, a layer comprising the compound of formula (I) is deposited on a cathode, as described herein. In certain articles and electrochemical cells according to the present invention, the compound of formula (I) is incorporated into the cathode (e.g., by mixing with a cathode active electrode material prior to the formation of the cathode).

In some articles and electrochemical cells according to the present invention, the electroactive material in the cathode comprises the compound of formula (I). That is, the ionically conductive compound of formula (I) may be the active electrode species of the cathode. In certain cathodes, the compound of formula (I) is a lithium intercalation compound (e.g., a compound that is capable of reversibly inserting lithium ions at lattice sites and/or interstitial sites). The cathode may be an intercalation electrode comprising a compound of formula (I).For example, the cathode comprises at least one compound of formula (I) selected from the group consisting of Li₁₆S₁₅MP₂, Li₂₀S₁₇MP₂, Li₂₁S_{17.5}SiP₂, Li₂₂S₁₈SiP₂ and Li₂₄S₁₉MP₂. Incorporation of other ionically conductive compounds in addition to or alternatively to those described above are also possible.

For example, the electroactive material in the cathode comprising a compound of formula (I) is present in said cathode in an amount of at least 30 wt%, at least 40 wt%, at least 50 wt%, at least 60 wt%, at least 70 wt%, at least 80 wt%, at least 85 wt%, at least 90 wt%, at least 95 wt%, or at least 98 wt% versus the total cathode weight. For example, the electroactive material in the cathode comprising the compound of formula (I) is present in the cathode in an amount of less than or equal to 100 wt%, less than or equal to 99 wt%, less than or equal to 98 wt%, less than or equal to 95 wt%, less than or equal to 90 wt%, less than or equal to 85 wt%, less than or equal to 80 wt%, less than or equal to 70 wt%, less than or equal to 60 wt%, or less than or equal to 50 wt% versus the total cathode weight. Combinations of the above-referenced ranges are also possible (e.g., at least 40 wt% and less than or equal to 95 wt%). Other ranges are also possible.

Additional non-limiting examples of suitable materials that may intercalate ions of an electroactive material (e.g., alkaline metal ions), and which may be included in an electrode (e.g., cathode), include oxides, titanium sulfide, and iron sulfide. Specific examples include LixCoO₂, LiₓNiO₂, LixMnO₂, LixMn₂O₄, LiₓFePO₄, LiₓCoPO₄, LiₓMnPO₄ and LiₓNiPO₄, where (0 < x ≤ 1 and LiNiₓMn_{y}Co_{z}O₂ where (x + y + z =1).

Active electrode materials for use as cathode active material in the cathode of the electrochemical cells described herein may include, but are not limited to, electroactive transition metal chalcogenides, electroactive conductive polymers, sulfur, carbon, and/or combinations thereof. As used herein, the term "chalcogenides" pertains to compounds that contain one or more of the elements of oxygen, sulfur, and selenium. Examples of suitable transition metal chalcogenides include, but are not limited to, the electroactive oxides, sulfides, and selenides of transition metals selected from the group consisting of Mn, V, Cr, Ti, Fe, Co, Ni, Cu, Y, Zr, Nb, Mo, Ru, Rh, Pd, Ag, Hf, Ta, W, Re, Os, and Ir. Preferably, the transition metal chalcogenide is selected from the group consisting of the electroactive oxides of nickel, manganese, cobalt, and vanadium, and the electroactive sulfides of iron. In other cases, the cathode may include as an electroactive species elemental sulfur, sulfides, and/or polysulfides.

A cathode may include one or more of the following materials: manganese dioxide, iodine, silver chromate, silver oxide and vanadium pentoxide, copper oxide, copper oxyphosphate, lead sulfide, copper sulfide, iron sulfide, lead bismuthate, bismuth trioxide, cobalt dioxide, copper chloride, manganese dioxide, and carbon. In other cathodes, the cathode active layer comprises an electroactive conductive polymer. Examples of suitable electroactive conductive polymers include, but are not limited to, electroactive and electronically conductive polymers selected from the group consisting of polypyrroles, polyanilines, polyphenylenes, polythiophenes, and polyacetylenes. Examples of conductive polymers include polypyrroles, polyanilines, and polyacetylenes.

Active electrode materials for use as cathode active materials in electrochemical cells described herein include electroactive sulfur-containing materials (e.g., lithium-sulfur electrochemical cells). "Electroactive sulfur-containing materials," as used herein, relates to cathode active materials which comprise the element sulfur in any form, wherein the electrochemical activity involves the oxidation or reduction of sulfur atoms or moieties. The nature of the electroactive sulfur-containing materials useful in the practice of this invention may vary widely, as known in the art. For example, the electroactive sulfur-containing material comprises elemental sulfur. In another example, the electroactive sulfur-containing material comprises a mixture of elemental sulfur and a sulfur-containing polymer. Thus, suitable electroactive sulfur-containing materials may include, but are not limited to, elemental sulfur and organic materials comprising sulfur atoms and carbon atoms, which may or may not be polymeric. Suitable organic materials include those further comprising heteroatoms, conductive polymer segments, composites, and conductive polymers.

In certain cathodes, the sulfur-containing material (e.g., in an oxidized form) comprises a polysulfide moiety, Sₘ, selected from the group consisting of covalent Sₘ moieties, ionic Sₘ moieties, and ionic Sₘ₂₋ moieties, wherein m is an integer equal to or greater than 3or an integer equal to or greater than 6 or an integer equal to or greater than 8. In some cases, the sulfur-containing material may be a sulfur-containing polymer. For instance, the sulfur-containing polymer has a polymer backbone chain and the polysulfide moiety Sₘ is covalently bonded by one or both of its terminal sulfur atoms as a side group to the polymer backbone chain. For example, the sulfur-containing polymer has a polymer backbone chain and the polysulfide moiety Sₘ is incorporated into the polymer backbone chain by covalent bonding of the terminal sulfur atoms of the polysulfide moiety.

In some cases, the electroactive sulfur-containing material comprises more than 50% by weight of sulfur or more than 75% by weight of sulfur (e.g., more than 90% by weight of sulfur).

As will be known by those skilled in the art, the nature of the electroactive sulfur-containing materials described herein may vary widely including elemental sulfur and a mixture of elemental sulfur and a sulfur-containing polymer.

In some cases, an electrochemical cell as described herein comprises one or more cathodes comprising sulfur as a cathode active material. Herein sometimes the cathode includes elemental sulfur as a cathode active material. Herein sometimes the compound of formula (I) is chosen such that the compound of formula (I) is different from the anode active material and different from the cathode active material.

As described herein, an electrochemical cell or an article for use in an electrochemical cell may include an electrode (e.g., an anode) comprising an anode active material. Herein, for instance a layer comprising the compound of formula (I) is deposited on an anode, or the compound of formula (I) is incorporated into the electrode (e.g., by mixing with an active electrode material prior to the formation of the anode).

The compound of formula (I) may be present in the anode in an amount of at least 40 wt%, at least 50 wt%, at least 60 wt%, at least 70 wt%, at least 80 wt%, or at least 85 wt% versus the total anode weight. The compound of formula (I) may be present in the anode in an amount of less than or equal to 90 wt%, less than or equal to 85 wt%, less than or equal to 80 wt%, less than or equal to 70 wt%, less than or equal to 60 wt%, or less than or equal to 50 wt% versus the total anode weight. Combinations of the above-referenced ranges are also possible (e.g., at least 40 wt% and less than or equal to 90 wt%). Other ranges are also possible. The total anode weight may be measured as the anode active layer itself or the anode active material including any protective layer(s).

Suitable active electrode materials for use as anode active material in the electrochemical cells described herein include, but are not limited to, lithium metal such as lithium foil and lithium deposited onto a conductive substrate, lithium alloys (e.g., lithium-aluminum alloys and lithium-tin alloys), and graphite. Lithium can be contained as one film or as several films, optionally separated by a protective material such as a ceramic material or an ion conductive material described herein. Suitable ceramic materials include silica, alumina, or lithium containing glassy materials such as lithium phosphates, lithium aluminates, lithium silicates, lithium phosphorous oxynitrides, lithium tantalum oxide, lithium aluminosulfides, lithium titanium oxides, lithium silcosulfides, lithium germanosulfides, lithium aluminosulfides, lithium borosulfides, and lithium phosphosulfides, and combinations of two or more of the preceding. Suitable lithium alloys as mentioned herein include alloys of lithium and aluminum, magnesium, silicium (silicon), indium, and/or tin. While these materials may be preferred in some cases, other cell chemistries are also contemplated. For instance, electrodes (e.g., anodes) may include other alkali metals (e.g., group 1 atoms). The anode may comprise one or more binder materials (e.g., polymers, etc.).

In other cases, a silicon-containing or silicon-based anode may be used.

The thickness of the anode may vary from, e.g., 2 to 200 µm. For instance, the anode may have a thickness of less than 200 µm, less than 100 µm, less than 50 µm, less than 25 µm, less than 10 µm, or less than 5 µm. In The anode may have a thickness of greater than or equal to 2 µm, greater than or equal to 5 µm, greater than or equal to 10 µm, greater than or equal to 25 µm, greater than or equal to 50 µm, greater than or equal to 100 µm, or greater than or equal to 150 µm. Combinations of the above-referenced ranges are also possible (e.g., greater than or equal to 2 um and less than or equal to 200 µm, greater than or equal to 2 µm and less than or equal to 100 µm, greater than or equal to 5 um and less than or equal to 50 µm, greater than or equal to 5 µm and less than or equal to 25 µm, greater than or equal to 10 µm and less than or equal to 25 µm). Other ranges are also possible. The choice of the thickness may depend on cell design parameters such as the excess amount of lithium desired, cycle life, and the thickness of the cathode electrode.

In some cases, an electrochemical cell described herein comprises at least one current collector. Materials for the current collector may be selected from metals (e.g., copper, nickel, aluminum, passivated metals, and other appropriate metals), metallized polymers, electrically conductive polymers, polymers comprising conductive particles dispersed therein, and other appropriate materials. In certain electrochemical cells, the current collector is deposited onto the electrode layer using physical vapor deposition, chemical vapor deposition, electrochemical deposition, sputtering, doctor blading, flash evaporation, or any other appropriate deposition technique for the selected material. In some cases, the current collector may be formed separately and bonded to the electrode structure. It should be appreciated, however, that in some electrochemical cells a current collector separate from the electroactive layer may not be present or needed.

Sometimes, an electrochemical cell comprises a lithium or silicon based anode, a cathode (e.g., a cathode comprising electroactive sulfur-containing material, an intercalation cathode) and a solid electrolyte layer comprising the compound of formula (I). The electrochemical cell may include other components as described herein.

Sometimes, an electrochemical cell comprises a lithium or silicon based anode, a cathode (e.g., a cathode comprising electroactive sulfur-containing material, an intercalation cathode), a liquid electrolyte, and a protective layer comprising the compound of formula (I). The electrochemical cell may include other components as described herein.

Sometimes, an electrochemical cell comprises a lithium or silicon based anode, a cathode (e.g., a cathode comprising electroactive sulfur-containing material, an intercalation cathode), a liquid electrolyte, and a separator comprising the compound of formula (I). The electrochemical cell may include other components as described herein.

Sometimes, an electrochemical cell comprises a lithium or silicon based anode, an intercalation cathode (e.g., a cathode comprising the compound of formula (I) as an intercalation species), and an electrolyte (e.g., a liquid electrolyte). The electrochemical cell may include other components as described herein.

### EXAMPLES

The following examples are intended to illustrate certain aspects and features of the present invention, but do not exemplify the full scope of the invention.

Non-limiting examples of the present invention will be described with reference to the accompanying figures, which are schematic and are not intended to be drawn to scale. In the figures, each identical or nearly identical component illustrated is typically represented by a single numeral. For purposes of clarity, not every component is labeled in every figure, nor is every component of each examples of the invention shown where illustration is not necessary to allow those of ordinary skill in the art to understand the invention. In the figures:
FIGS. 1A-1E are schematics of exemplary articles incorporating compounds of formula (I)
FIG. 2 is a plot of conductivity (in S/cm) as a function of x for a compound having a formula as in Li₂ₓSₓ₊₇SiP₂,
FIG. 3 is an XRD spectral plot of Li₁₀S₁₂SiP₂ and Li₂₀S₁₇SiP₂,
FIG. 4 is an XRD spectral plot of Li₁₀S₁₂SiP₂ and Li₂₄S₁₉SiP₂, and
FIG. 5 is an XRD spectral plot of Li₂₀S₁₇SiP₂ before and after electrolyte exposure.
FIG. 6 is an XRD spectral plot of Li₂₂SiP₂S₁₈ before and after electrolyte exposure.
FIG. 7 is an XRD spectral plot of Li₁₈P₃S₁₅Br₃ before and after electrolyte exposure.

### Exemplary articles according to the present invention

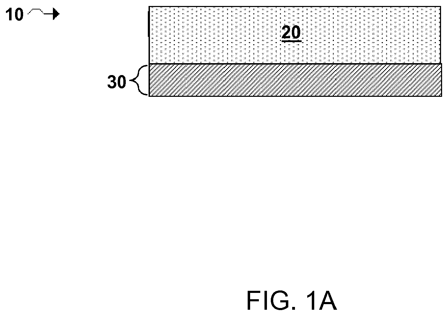

FIG. 1A shows an example of an article that can be incorporated into an electrochemical cell. Exemplary article 10 includes an electrode 20 (e.g., an anode or a cathode) that comprises an electroactive material and a separator 30 adjacent the electrode. Separator 30 comprises at least one ionically conductive compound of formula (I) and/or a plurality of particles comprising a least one ionically conductive compound of formula (I). The ionically conductive compound is directly deposited on at least a portion of a surface of the separator and/or the ionically conductive compound is incorporated into the separator.

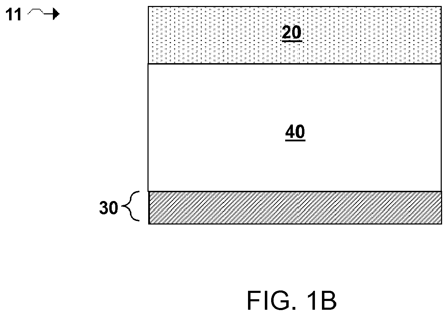

As illustrated in FIG. 1B, exemplary article 11 includes an electrode 20 (e.g., an anode or a cathode) that comprises an electroactive material, an electrolyte 40 adjacent the electrode, and separator 30 adjacent the electrolyte. Separator 30 comprises at least one ionically conductive compound of formula (I) and/or a plurality of particles comprising a least one ionically conductive compound of formula (I). The ionically conductive compound is directly deposited on at least a portion of a surface of the separator and/or the ionically conductive compound is incorporated into the separator.

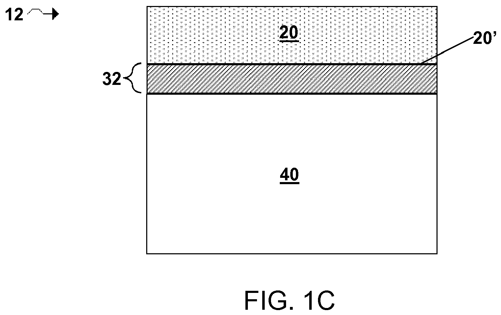

Referring now to FIG. 1C, an exemplary article 12 comprises electrode 20, a protective layer 32 disposed on or adjacent at least a portion of electrode active surface 20', and an optional electrolyte 40. A second protective layer (not shown in FIG. 1C) adjacent protective layer 32 may be present. Herein, at least one or both of protective layer 32 and the second protective layer includes at least one ion-conductive layer comprising the ionically conductive compound of formula (I).

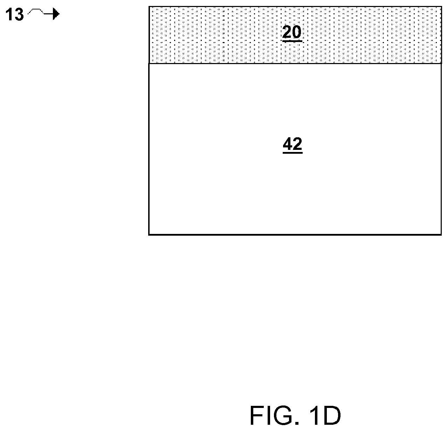

Referring to FIG. 1D, an exemplary article 13 comprises electrode 20 (e.g., an anode or a cathode) and a solid electrolyte 42 in direct contact with electrode 20. Solid electrolyte 42 is a solid electrolyte layer comprising the ionically conductive compound of formula (I).

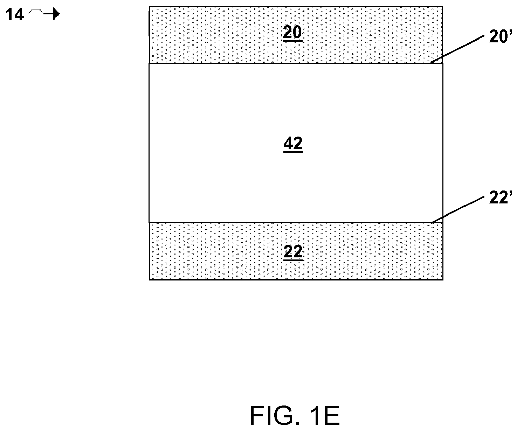

A illustrated in FIG. 1E, an exemplary article 14 comprises electrode 20 (e.g., a cathode) and electrode 22 (e.g., an anode) in direct contact with solid electrolyte 42 at a first electrode surface 20' and a second electrode surface 22', respectively. Solid electrolyte 42 is a solid electrolyte layer comprising the ionically conductive compound of formula (I).

It should be understood that while certain layers depicted in the figures are disposed directly on one another, other intermediate layers may also be present between the depicted layers in certain embodiments. Accordingly, as used herein, when a layer is referred to as being "disposed on", "deposited on", or "on" another layer, it can either be directly disposed on, deposited onto, or on the layer, or an intervening layer may also be present. In contrast, a layer that is "directly disposed on", "in contact with", "directly deposited on", or "directly on" another layer indicates that no intervening layer is present.

### EXAMPLE 1

This example describes the conductivity and structure of various ionically conductive compounds having a composition as in Formula (I): Li₂ₓS_{x+w+5z}M_{y}P_{2z}, where x is 5 to 14, y and z are 0.5 to 1, w is y, 1.5y or 2y, and M is Si. A comparative compound, Li₂ₓSₓ₊₇GeP₂, was also formed.

lonically conductive compounds were formed by mixing of precursors Li₂S, SiS₂ (or GeS₂, resp.), P₂S₅ or precursors Li₂S, Si (or Ge, resp.), S₈, P₂S₅, or precursors Li₂S, Si, S₈, P, in each case according to stoichiometry to form the compounds as listed in Table 1. The mixtures were mixed by ball milling. The mixtures were sealed in a closed vessel under inert atmosphere (e.g., Argon) and heated to 700 °C for between 12-16 hours. The vessels were then cooled to room temperature and the materials were ground into powder form.

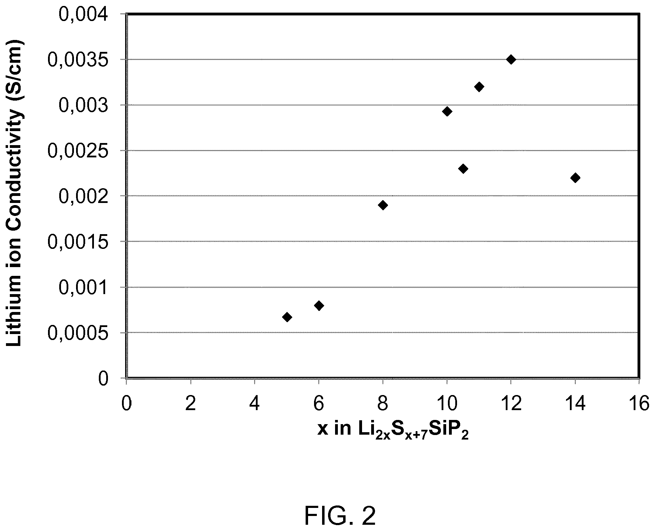

FIG. 2 shows the conductivity of particles of ionically conductive compounds having the formula Li₂ₓSₓ₊₇SiP₂ as a function of x. The conductivity data are summarized in Table 1. Table 1 also includes the conductivity of comparative compound Li₂₄GeP₂S₁₉. The average ionic conductivity was measured by pressing the particles between two copper cylinders at a pressure of up to 4 tons/cm², and determining the conductivity using a conductivity bridge operating at 1 kHz at 25 °C, at 500 kg/cm² increments of pressure until changes in average ion conductivity were no longer observed in the sample.

**Table 1**

| | **x** | **Conductivity [S/cm]** |
|---|---|---|
| Li₁₀S₁₂SiP₂ | 5 | 6.76 x 10⁻⁴ |
| Li₁₂S₁₃SiP₂ | 6 | 8.0 x 10⁻⁴ |
| Li₁₆S₁₅SiP₂ | 8 | 1.9 x 10⁻³ |
| Li₂₀S₁₇SiP₂ | 10 | 2.93 x 10⁻³ |
| Li₂₁S₁₇Si₂P | 10.5 | 2 x 10⁻³ |
| Li₂₁S_{17.5}SiP₂ | 10.5 | 2.30 x 10⁻³ |
| Li₂₂S₁₈SiP₂ | 11 | 3.2 x 10⁻³ |
| Li₂₄S₁₉SiP₂ | 12 | 2.83 x10⁻³ |
| Li₂₈S₂₁SiP₂ | 14 | 2.2 x 10⁻³ |
| Li₂₄S₁₉GeP₂ | 12 | 3.1 x 10⁻³ |

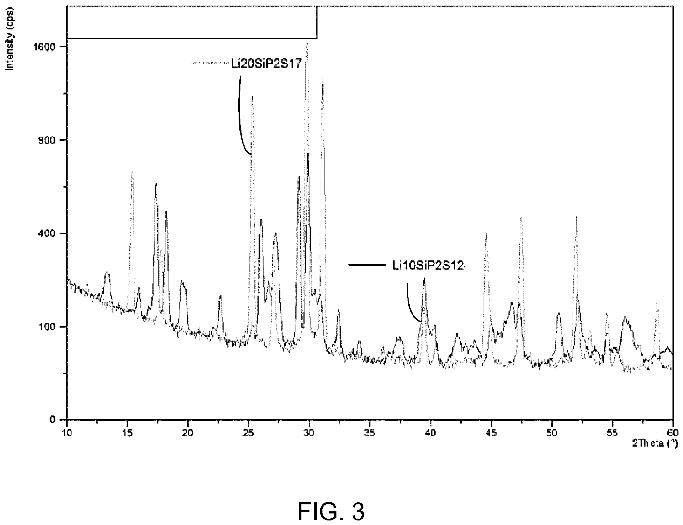

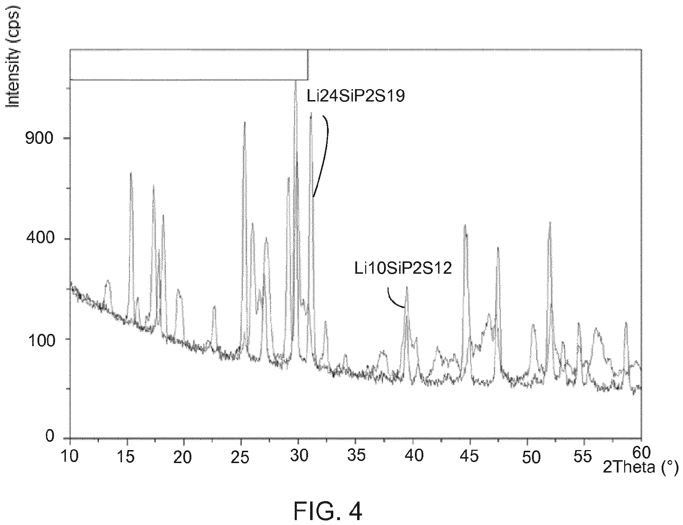

The XRD patterns indicate that particles of Li₂₀SiP₂S₁₇ (FIG. 3) and of Li₂₄SiP₂S₁₉ (FIG. 4) have different structures from that of Li₁₀SnP₂S₁₂ particles. Li₂₀SiP₂S₁₇ and Li₂₄SiP₂S₁₉ had similar XRD patterns, which showed much less pronounced satellite peaks, suggesting that these structures have higher ordering (e.g., each having a cubic lattice) and higher degree of crystallinity within the structure, compared to those reported for Li₁₀SnP₂S₁₂ and Li₁₀GeP₂S₁₂. Furthermore, negligible features of Li₂S (e.g., standard peak positions for Li₂S) appear in each of the spectra, indicating that a chemical reaction occurred (and not, for example, a mere mechanical mixture of the starting compounds).

### EXAMPLE 2

This example demonstrates the stability of the ionically conductive compound Li₂₀SiP₂S₁₇ in the presence of an electrolyte.

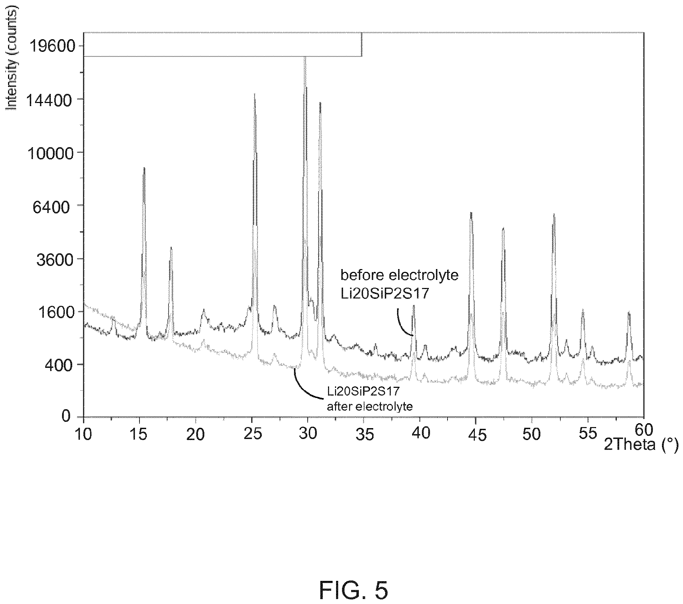

FIG. 5 shows XRD patterns from particles of Li₂₀SiP₂S₁₇ before and after soaking in an LP30 electrolyte (1M of LiPF₆ in a 1:1 ratio of ethyl carbonate and dimethyl carbonate) for 3 weeks at 40 °C. The XRD patterns demonstrate very similar structure before and after the electrolyte soak.

### EXAMPLE 3

This example demonstrates the stability of lithium in the presence of the ionically conductive compounds described herein.

Stability in the presence of lithium was tested using sandwich structures in which a pellet of particles of an ionically-conductive compound (e.g., Li₁₀SiP₂S₁₂, Li₂₀SiP₂S₁₇ or Li₂₄SiP₂S₁₉, e.g., between 0.5 to 2 mm in average thickness) was placed between two lithium metal foils.

In a sandwich structure Li/Li₁₀SiP₂S₁₂/Li, the lithium metal was consumed over time, which indicated that the material was not stable against lithium metal. Sandwich structures incorporating Li₂₀SiP₂S₁₇ or Li₂₄SiP₂S₁₉, (Li/Li₂₀SiP₂S₁₇/Li and Li/ Li₂₄SiP₂S₁₉/Li, resp.) demonstrated an improved stability next to lithium metal compared to Li₁₀SiP₂S₁₂. Stability was also confirmed qualitatively by opening the structures (e.g., Li/Li₁₀SiP₂S₁₂Li) and observing changes in the pellet layer.

### EXAMPLE 4

This example describes the conductivity and structure of an ionically conductive compound having the formula Li₂₁S₁₇GaP₂ (i.e., Formula (I): Li₂ₓS_{x+w+5z}M_{y}P_{2z}, where x is 10.5, y is 1, w is 1.5y, z is 1, and M is Ga).

The ionically conductive compound Li₂₁S₁₇GaP₂ was formed by mixing Li₂S, GaS₂, and P₂S₅. The mixture was mixed by ball milling. The mixture was sealed in a closed vessel under inert atmosphere (e.g., Argon) and heated to 700 °C for between 12-16 hours. The vessel was then cooled to room temperature and the material was ground into powder form to form Li₂₁S₁₇GaP₂.

The average ionic conductivity of Li₂₁S₁₇GaP₂ was 1.4 x 10⁻⁴ S/cm. The average ionic conductivity was measured by pressing the particles between two copper cylinders at a pressure of up to 4 tons/cm², and determining the conductivity using a conductivity bridge operating at 1 kHz at 25 °C, at 500 kg/cm² increments of pressure until changes in average ion conductivity were no longer observed in the sample.

### EXAMPLE 5

This example demonstrates the stability of the ionically conductive compound Li₂₂SiP₂S₁₈ in the presence of an electrolyte.

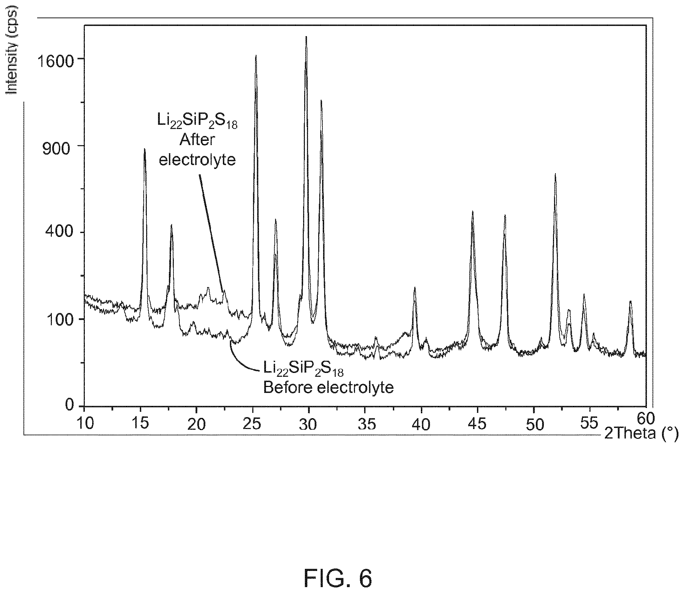

FIG. 6 shows XRD patterns from particles of Li₂₂SiP₂S₁₈ before and after soaking in an organic liquid carbonate-based electrolyte for 2 weeks at 40 °C. The XRD patterns demonstrate very similar structures before and after the electrolyte soak, showing that the compound is stable in this electrolyte.

### COMPARATIVE EXAMPLE 5

This example demonstrates the stability of the ionically conductive compound Li₁₈P₃S₁₅Br₃ in the presence of an electrolyte.

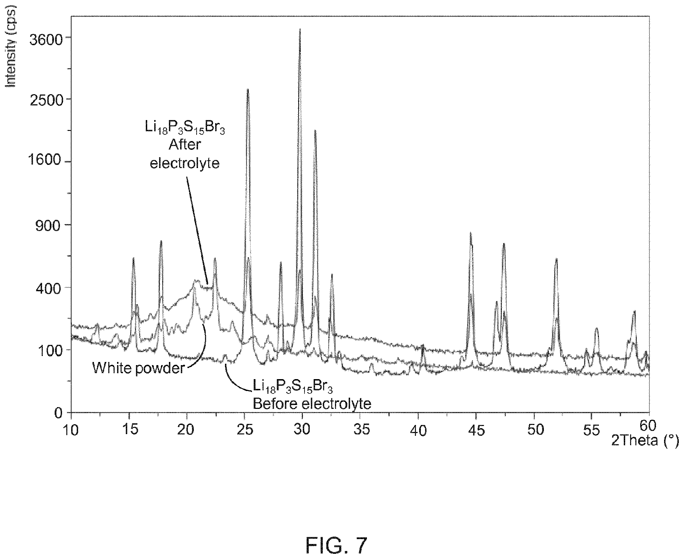

FIG. 7 shows XRD patterns from particles of Li₁₈P₃S₁₅Br₃ before and after soaking in an organic liquid carbonate-based electrolyte for 2 weeks at 40°C. A white thick powder formed around the particles. The XRD patterns and presence of the white powder suggest that the Li₁₈P₃S₁₅Br₃ particles reacted with the electrolyte.

### EXAMPLE 6

This example describes the conductivity and composition of various ionically conductive compounds having a composition as in formula Li₂ₓS_{x+w+5z}M_{y}P_{2z}, where x is 5.5-10.5, y and z are 0.5-2, w is y, 1.5y, or 2y, and M is Si, Al, La, B, and/or Ga. A comparative compound having the formula Li₂₁AlSi₂S₁₆ (substituting Al for P), was also formed.

Ionically conductive compounds were formed by mixing of Li₂S, SiS₂, P₂S₅, and/or using different precursors like Li₂S, Si (or Al, La, B, and/or Ga), S₈, P₂S₅, or Li₂S, Si, S₈, P according to stoichiometry to form the compounds as listed in Table 2. The mixtures were mixed by ball milling. The mixtures were sealed in a closed vessel under an inert atmosphere (e.g., argon) and heated to 500°C or 700°C, as noted, for between 12-16 hours. The vessels were then cooled to room temperature and the materials were ground into powder form.

The conductivity of particles of ionically conductive compounds having the formula Li₂ₓS_{x+w+5z}M_{y}P_{2z} is summarized in Table 2. The average ionic conductivity was measured by pressing the particles between two copper cylinders at a pressure of up to 4 tons/cm², and determining the conductivity using a conductivity bridge operating at 1 kHz at 25 °C, at 500 kg/cm² increments of pressure until changes in average ion conductivity were no longer observed in the sample.

**Table 2**

| | **Synthesis Temperature (°C)** | **Conductivity [mS/cm]** |
|---|---|---|
| Li₂₁SiP₂S_{17.5} | 700 | 2.5 |
| Li₂₁La_{0.5}Si_{1.5}PS_{16.75} | 700 | 2.1 |
| Li₂₁LaSiPS_{16.5} | 700 | 1.0 |
| Li₂₁La₂PS₁₆ | 700 | 0.0011 |
| Li₂₁AlP₂S₁₇ | 700 | 0.0029 |
| Li₁₇AlP₂S₁₅ | 700 | 0.0039 |
| Li₁₇Al₂PS₁₄ | 700 | 0.0031 |
| Li₁₁AlP₂S₁₂ | 700 | 0.0026 |
| Li₁₁AlP₂S₁₂ | 500 | 0.13 |
| Li₂₁AlSiPS_{16.5} | 700 | 0.57 |
| Li₂₁Al_{0.5}Si_{1.5}PS_{16.75} | 700 | 0.71 |
| Li₂₁AlSi₂S₁₆ | 700 | 0.03 |
| Li₂₁BP₂S₁₇ | 700 | 0.094 |
| Li₂₁GaP₂S₁₇ | 700 | 0.14 |

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, to A only (optionally including elements other than B); to B only (optionally including elements other than A); or to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, to at least one, optionally including more than one, A, with no B present (and optionally including elements other than B); to at least one, optionally including more than one, B, with no A present (and optionally including elements other than A); or to at least one, optionally including more than one, A, and at least one, optionally including more than one, B (and optionally including other elements); etc.

It should also be understood that, unless clearly indicated to the contrary, in any methods claimed herein that include more than one step or act, the order of the steps or acts of the method is not necessarily limited to the order in which the steps or acts of the method are recited.

### Embodiments:

1. A compound of formula (I):

   Li₂ₓS_{x+w+5z}M_{y}P_{2z} (I)

   wherein:
   each atom M independently of each other atom M is selected from the group consisting of Lanthanides and elements of Group 3, Group 4, Group 8, Group 12, Group 13 and Group 14 of the periodic system of elements, and
   x is 8-16,
   y is 0.1-6,
   w is 0.1-15 and
   z is 0.1-3.
2. A compound as in embodiment 1, wherein x is 10 or greater, particularly x is 10-14.
3. A compound as in any one of embodiments 1 and 2, wherein y is 1.
4. A compound as in any one of embodiments 1-3, wherein w is equal to y, 1.5y, or 2y.
5. A compound as in any one of embodiments 1-4, wherein z is 1.
6. A compound as in any one of embodiments 1-5, wherein each atom M independently of each other atom M is selected from the group consisting of silicon, tin, germanium, zinc, iron, zirconium, and aluminum.
7. A compound as in embodiment 6, wherein M is silicon.
8. A compound as in any one of embodiments 1-8, wherein the compound has an amorphous structure.
9. A compound as in any one of embodiments 1-8, wherein the compound has a crystalline structure.
10. A compound as in embodiment 9, wherein the compound has a cubic crystal structure.
11. An article for use in an electrochemical cell, said article comprising:
   one or more compounds of formula (I) as defined in any of embodiments 1-10.
12. An article as in embodiment 11, comprising a layer comprising the compound of formula (I).
13. An article as in embodiment 11, comprising the compound of formula (I) deposited on a layer.
14. An article as in any one of the preceding embodiments, comprising a plurality of particles that comprise the compound of formula (I).
15. An article as in any one of the preceding embodiments, comprising a layer comprising a plurality of particles that comprise the compound of formula (I).
16. An article as in any one of embodiments 14 and 15, wherein the plurality of particles have an average largest cross-sectional dimension of greater than or equal to 10 nm and less than or equal to 100 µm.
17. An article as in any one of embodiments 14-16, wherein the plurality of particles have an average ion conductivity of greater than or equal to 10⁻⁴ S/cm.
18. An article as in embodiment 12, said article further comprising an electrode, wherein the layer comprising the compound of formula (I) is in direct contact with the electrode.
19. An article as in embodiment 12, wherein the layer comprising the compound of formula (I) is a separator.
20. An article as in embodiment 15, wherein the layer comprising the compound of formula (I) has an average thickness of greater than or equal to 1 mm and less than or equal to 50 µm.
21. An article as in embodiment 12, wherein the layer comprising the compound of formula (I) is a protective layer.
22. An article as in embodiment 21, wherein the layer comprising the compound of formula (I) has an average thickness of greater than or equal to 1 nm and less than or equal to 10 µm.
23. An article as in embodiment 12, wherein the layer comprising the compound of formula (I) is a solid electrolyte layer.
24. An article as in embodiment 23, wherein the layer comprising the compound of formula (I) has an average thickness of greater than or equal to 50 nm and less than or equal to 25 µm.
25. An article as in embodiment 12, wherein the layer comprising the compound of formula (I) is a lithium-intercalation electrode.
26. An article as in embodiment 25, wherein the layer comprising the compound of formula (I) has an average ion conductivity of greater than or equal to 10⁻⁴ S/cm.
27. An article as in embodiment 12, wherein at least a portion of the layer comprising the compound of formula (I) is crystalline.
28. An article as in embodiment 12, wherein the layer comprising the compound of formula (I) is greater than or equal to 50 wt.-% and less than or equal to 99 wt.-% crystalline.
29. An article as in embodiment 12, wherein the crystalline fraction of the compound of formula (I) comprised by the layer is in the range of from 50 wt.-% to 100 wt.-%, based on the total weight of the compound of formula (I) comprised by the layer.
30. An article as in embodiment 12, wherein the layer comprising the compound of formula (I) is amorphous.
31. An electrochemical cell comprising an article as in any one of embodiments 11-30.
32. An electrochemical cell as in embodiment 31, further comprising a liquid electrolyte.
33. An electrochemical cell as in any one of embodiments 31 and 32, comprising an anode comprising lithium or silicon.
34. An electrochemical cell as in any one of embodiments 31-33, comprising a cathode comprising sulfur.
35. An electrochemical cell as in any one of embodiments 31-34, comprising a cathode comprising a lithium-intercalation species.
36. Use of a compound of the formula (I)
   - as an ion conductor in an electrochemical cell or in an article for use in an electrochemical cell and/or
   - for forming an electrochemical cell or an article for use in an electrochemical cell.
37. A method, comprising:
   - heating a mixture of precursors comprising atoms of the elements Li, S, P, and M wherein M is as defined in any of embodiments 1-10, to a temperature ranging from 400 °C to 800 °C for a duration ranging from 3 hours to 24 hours;
   - cooling the mixture; and
   - forming a plurality of particles comprising a compound of formula (I) as defined in any of embodiments 1-10.
38. A method for forming a plurality of particles as in embodiment 37, wherein:
   the mixture of precursors comprises Li₂S, MSₐ and P_{b}S_{c},
      wherein:
      a is 0-8;
      b is 0-2; and
      c is 0-8, such that b+c is 1 or greater.
39. A method as in embodiment 37 or 38, wherein, prior to heating, the mixture is mixed by ball milling.
40. A method as in any of embodiments 37 to 40, wherein heating the mixture occurs at a pressure of between 0.1 MPa and 0.3 MPa.
41. A method as in any of embodiments 37 to 40, forming said plurality of particles comprises grinding the mixture.
42. A method for forming an article for use in an electrochemical cell, comprising:
   - depositing on a layer a plurality of particles comprising a compound of formula (I) as defined in any of embodiments 1-10.
43. A method as in any one of embodiments 42, wherein the plurality of particles have an average largest cross-sectional dimension greater than or equal to 10 nm and less than or equal to 100 microns.
44. A method as in embodiment 42 or 43, wherein depositing the plurality of particles comprising the compound of formula (I) on the layer comprises aerosol deposition.
45. A method as in embodiment 42 or 43, wherein depositing the compound of formula (I) on the layer comprises vacuum deposition.
46. A method as in any of embodiments 42 to 46, wherein the layer on which the particles are deposited is an electrode.
47. A method as in any of embodiments 42 to 45, wherein the layer on which the particles are deposited is a lithium metal layer.
48. A method as in any of embodiments 42 to 45, wherein the layer on which the particles are deposited is a protective layer or a separator.

## Claims

1. A compound of formula (I):
Li₂ₓS_{x+w+5z}M_{y}P_{2z} (I)
wherein:
each atom M independently of each other atom M is selected from the group consisting of Lanthanides and elements of Group 3, Group 4, Group 5, Group 6, Group 7, Group 8, Group 9, Group 12, Group 13 and Group 14 of the periodic system of elements, and
x is 8-16,
y is 0.1-6,
w is 0.1-15 and
z is 0.1-3.

2. A compound as in claim 1, wherein x is 10 or greater, particularly x is 10-14, and/or wherein y is 1,
and/or wherein w is equal to one of y, 1.5y, and 2y,
and/or wherein z is 1.

3. A compound as in any one of claims 1 or 2, wherein each atom M independently of each other atom M is selected from the group consisting of silicon, tin, germanium, zinc, iron, zirconium, and aluminum.

4. A compound as in any one of claims 1-3, wherein the compound has an amorphous structure.

5. A compound as in any one of claims 1-3, wherein the compound has a crystalline structure, preferably a cubic crystal structure.

6. An article for use in an electrochemical cell, said article comprising:
one or more compounds of formula (I) as defined in any of claims 1-5.

7. An article as in claim 6, comprising a layer comprising a plurality of particles that comprise the compound of formula (I).

8. An article as in any one of claims 6 and 7, wherein the plurality of particles have an average largest cross-sectional dimension of greater than or equal to 10 nm and less than or equal to 100 µm, and/or an average ion conductivity of greater than or equal to 10⁻⁴ S/cm.

9. An electrochemical cell comprising an article as in any one of claims 6-8.

10. Use of a compound of the formula (I)
- as an ion conductor in an electrochemical cell or in an article for use in an electrochemical cell and/or
- for forming an electrochemical cell or an article for use in an electrochemical cell.

11. A method, comprising:
- heating a mixture of precursors comprising atoms of the elements Li, S, P, and M wherein M is as defined in any of claims 1 to 5, to a temperature ranging from 400 °C to 900 °C, preferably to a temperature ranging from 400 °C to 800 °C, for a duration ranging from 3 hours to 24 hours;
- cooling the mixture; and
- forming a plurality of particles comprising a compound of formula (I) as defined in any of claims 1-5.

12. A method for forming a plurality of particles as in claim 11, wherein:
the mixture of precursors comprises Li₂S, MSₐ and P_{b}S_{c},
wherein:
a is 0-8;
b is 0-2; and
c is 0-8, such that b+c is 1 or greater.

13. A method for forming an article for use in an electrochemical cell, comprising:
- depositing on a layer a plurality of particles comprising a compound of formula (I) as defined in any of claims 1-5.

14. A method as in claim 13, wherein the plurality of particles have an average largest cross-sectional dimension greater than or equal to 10 nm and less than or equal to 100 microns.

15. A method as in claim 13 or 14, wherein depositing the plurality of particles comprising the compound of formula (I) on the layer comprises aerosol deposition.
